# EUROPÄISCHE PATENTSCHRIFT

(11) **EP 0 719 841 B1**
(45) Veröffentlichungstag und Bekanntmachung des Hinweises auf die Patenterteilung: **14.03.2001**
(21) Anmeldenummer: 95119791.2
(22) Anmeldetag: 15.12.1995
(51) Int. Cl.: C09B 67/22, C09B 62/44, D06P 1/38

(54) **Farbstoffmischung von wasserlöslichen faserreaktiven Azofarbstoffen, Verfahren zu ihrer Herstellung und ihre Verwendung**
Mixture of water soluble reactive azo dyes, process to manufacture it and its use
Mélange de colorants azoiques réactifs aquasolubles, son procédé de fabrication et son utilisation

(30) Priorität: 30.12.1994 DE 4447276
(43) Veröffentlichungstag der Anmeldung: 03.07.1996
(73) Patentinhaber: DyStar Textilfarben GmbH & Co. Deutschland KG, 60318 Frankfurt am Main (DE)
(72) Erfinder: Russ, Werner Hubert, Dr., D-65349 Flörsheim (DE); Gröbel, Bengt-Thomas, Dr., D-65529 Niederems (DE); Mrotzeck, Uwe, Dr., D-65779 Kelkheim (DE)

(56) Entgegenhaltungen:
- EP-A- 0 111 288
- EP-A- 0 219 741
- EP-A- 0 545 219
- EP-A- 0 546 372
- EP-A- 0 576 026
- EP-A- 0 668 328
- DATABASE WPI Section Ch, Week 9117 Derwent Publications Ltd., London, GB; Class E21, AN 91-123025 & JP-A-03 064 372 ( SUMITOMO CHEM IND KK) , 19.März 1991

## Beschreibung

Die Erfindung liegt auf dem technischen Gebiet der faserreaktiven Azofarbstoffe.

Aus der U. S.- Patentschrift Nr. 4 649 193 und der europäischen Patentanmeldungs-Veröffentlichung Nr. 0 094 055 sind Monoazofarbstoffe bekannt, die einen faserreaktiven Rest aus der Vinylsulfon-Reihe und als einen weiteren faserreaktiven Rest einen aminosubstituierten Chlortriazinylamino-Rest enthalten. Aus der europäischen Patentanmeldung EP-A-0 546 372 sind Mischungen von Monoazofarbstoffen bekannt, die mindestens einen Farbstoff mit einem faserreaktiven Rest aus der Vinylsulfon-Reihe und mindestens einen Farbstoff mit einer Fluortriazingruppe als faserreaktivem Rest enthalten. Die darin beschriebenen Farbstoffe besitzen jedoch gewisse anwendungstechnische Mängel, wie beispielsweise eine zu große Abhängigkeit der Farbausbeute von wechselnden Färbeparametern im Färbeprozeß, eine unzureichende Löslichkeit im wäßrigen Färbebad in höheren Farbstoffkonzentrationen in Gegenwart von Elektrolytsalzen oder einen ungenügenden Farbaufbau auf Baumwolle und insbesondere Viskose (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel kann eine schlechte Reproduzierbarkeit der erhältlichen Färbungen sein.

Es ist jedoch insbesondere wichtig, Färbungen mit guter Farbausbeute zu erhalten, d.h. Färbungen, deren Farbtiefe im Verhältnis zu eingesetzter Farbstoffmenge, beispielsweise im Vergleich zu anderen Farbstoffen, aufgrund der Farbeigenschaft des Farbstoffes selbst (hoher Extinktionswert) und aufgrund des färberischen Verhaltens dieses Farbstoffes, wie gutes Ausziehvermögen und hoher Fixierwert, möglichst hoch ist. Setzt man Mischungen von Farbstoffen bestimmter Farbausbeute ein, so ist es die Regel, daß sich die Farbausbeute dieser Mischung aus dem Mittel der Summe der Farbausbeuten der Einzelfarbstoffe ergibt. Die Farbausbeute einer Mischung von beispielsweise zwei Farbstoffen wird deshalb geringer sein als die Farbausbeute desjenigen Einzel-Farbstoffes mit der größeren Farbausbeute-Eigenschaft.

Mit der vorliegenden Erfindung wurde nunmehr gefunden, daß die Farbausbeute der nachstehend beschriebenen erfindungsgemäßen Farbstoffmischungen überraschenderweise bedeutend höher liegen als das Mittel der Summe der Farbausbeuten, die die Einzelfarbstoffe der Farbstoffmischung liefern. Dieser synergistische Effekt zeigt sich zudem in einem verbesserten Aufbauverhalten der erfindungsgemäßen Mischung gegenüber den einzelnen Farbstoffen der Mischung.

Die Erfindung betrifft Farbstoffmischungen, die einen oder mehrere, wie zwei oder drei, Azofarbstoffe entsprechend der allgemeinen Formel (1) und einen oder mehrere, wie zwei oder drei, Azofarbstoffe entsprechend der allgemeinen Formel (2) enthalten.

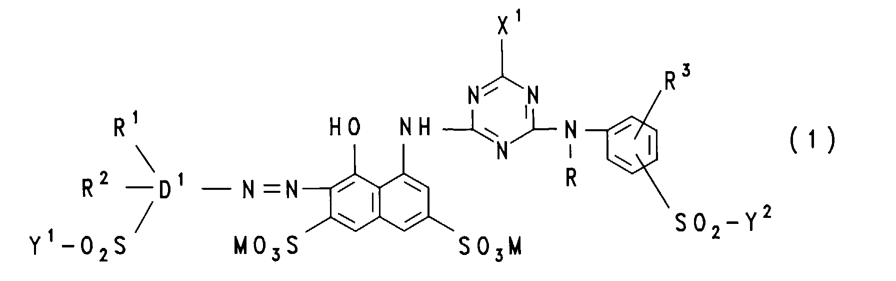

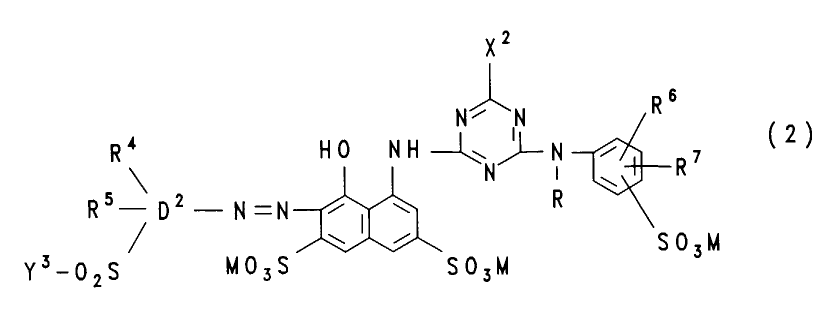

In diesen Formeln bedeuten:
- M: ist Wasserstoff oder ein Alkalimetall, wie Lithium, Natrium oder Kalium, oder das stöchiometrische Äquivalent eines Erdalkalimetalls, wie des Calciums, bevorzugt Wasserstoff, Natrium, Kalium oder Lithium;
- D¹: ist der Rest eines Benzol- oder Naphthalinkerns, wobei im Falle des Naphthalinkerns die Azogruppe bevorzugt in 2-Stellung gebunden ist;
- D²: hat eine der Bedeutungen von D¹;
- R¹: ist Wasserstoff oder Alkyl von 1 bis 4 C-Atomen, wie Ethyl und insbesondere Methyl, oder Alkoxy von 1 bis 4 C-Atomen, wie Ethoxy und insbesondere Methoxy, falls D¹ oder D² für den Rest eines Benzolkerns steht, oder ist Wasserstoff oder Sulfo, falls D¹ oder D² den Rest eines Naphthalinkerns bedeutet;
- R²: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, falls D¹ oder D² für den Rest eines Benzolkerns steht, oder ist Wasserstoff oder Sulfo, falls D¹ oder D² den Rest eines Naphthalinkerns bedeutet;
- R³: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy;
- R⁴: ist Wasserstoff oder Alkyl von 1 bis 4 C-Atomen, wie Ethyl und insbesondere Methyl, oder Alkoxy von 1 bis 4 C-Atomen, wie Ethoxy und insbesondere Methoxy;
- R⁵: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo;
- R⁶: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy;
- R⁷: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo;
- R: ist Wasserstoff oder Alkyl von 1 bis 4 C-Atomen, wie Ethyl und insbesondere Methyl, bevorzugt Wasserstoff;
- Y¹: ist Vinyl, β-Sulfatoethyl, β-Thiosulfatoethyl oder β-Chlorethyl, bevorzugt Vinyl oder β-Sulfatoethyl;
- Y²: hat eine der Bedeutungen von Y¹;
- Y³: hat eine der Bedeutungen von Y¹;
- X¹: ist Fluor, Brom oder Chlor, bevorzugt Fluor und insbesondere Chlor;
- X²: hat eine der Bedeutungen von X¹;
die Gruppen -SO₂-Y¹, -SO₂-Y² und -SO₂-Y³ stehen in meta- oder para-Stellung zur Azogruppe an dem Benzolkern von D¹ und D² bzw. in meta-oder para-Stellung zur Aminogruppe gebunden.

Die einzelnen Formelglieder in den Formeln (1) und (2) und ebenso in den nachfolgend genannten allgemeinen Formeln können im Rahmen ihrer Definition zueinander gleiche oder voneinander verschiedene Bedeutungen besitzen.

Im allgemeinen sind der oder die Azofarbstoffe der allgemeinen Formel (1) und der oder die Azofarbstoffe der allgemeinen Formel (2) in der Mischung in einem Mischungsverhältnis von 90:10 Gew.-% bis 10:90 Gew.-%, bevorzugt im Verhältnis von 70:30 Gew.-% bis 30:70 Gew.-%, enthalten. Insbesondere bevorzugt sind sie in der Mischung in einem Verhältnis von 55:45 bis 45:55 Gew.-% enthalten.

Reste der Formeln Y¹-O₂S-D¹-(R¹,R²)- und Y³-O₂S-D²(R⁴,R⁵)- der Azofarbstoffe der allgemeinen Formeln (1) und (2) sind beispielsweise 3-(β-Sulfatoethylsulfonyl)-phenyl, 4-(β-Sulfatoethylsulfonyl)-phenyl, 2-Methyl-5-(β-sulfatoethylsulfonyl)-phenyl, 2-Methoxy-5-(β-sulfatoethyl-sulfonyl)-phenyl, 4-Methyl-3-(β-sulfatoethylsulfonyl)-phenyl, 2,5-Dimethyl-4-(β-sulfatoethylsulfonyl)-phenyl, 2,6-Dimethyl-4-(β-sulfatoethylsulfonyl)-phenyl, 2-Methoxy-4-(β-sulfatoethylsulfonyl)-phenyl, 4-Methoxy-5-(β-sulfatoethylsulfonyl)-phenyl, 2-Methoxy-5-methyl-4-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 6-(β-Sulfatoethylsulfonyl)-1-sulfo-naphth-2-yl und 8-(β-Sulfatoethylsulfonyl)-6-sulfo-naphth-2-yl, hiervon insbesondere 4-(β-Sulfatoethylsulfonyl)-phenyl, sowie Derivate dieser Reste, in welchen die β-Sulfatoethylsulfonyl-Gruppe durch die Vinylsulfonyl- oder β-Thiosulfatoethylsulfonyl- oder β-Chlorethylsulfonyl-Gruppe ausgetauscht ist.

Benzolreste, die die Substituenten R³ und -SO₂-Y² in der allgemeinen Formel (1) enthalten, sind beispielsweise 3-(β-Sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-4-(β-sulfatoethylsulfonyl)-phenyl, 4-Methoxy-5-(β-sulfatoethylsulfonyl)-phenyl, 2,4-Dimethoxy-5-(β-sulfatoethylsulfonyl)-phenyl, 2-Methoxy-5-methyl-4-(β-sulfatoethylsulfonyl)-phenyl, 2-Methyl-5-(β-sulfatoethylsulfonyl)-phenyl, 2,5-Dimethyl-4-(β-sulfatoethylsulfonyl)-phenyl, 2,6-Dimethyl-4-(β-sulfatoethylsulfonyl)-phenyl, 4-Methyl-3-(β-sulfatoethyl-sulfonyl)-phenyl und insbesondere 4-(β-Sulfatoethylsulfonyl)-phenyl sowie die Derivate dieser Reste, in welchen die β-Sulfatoethylsulfonyl-Gruppe durch die Vinylsulfonyl- oder β-Thiosulfatoethylsulfonyl- oder die β-Chlorethylsulfonyl-Gruppe ausgetauscht ist.

Benzolreste, die als Substituenten einen Rest R⁶, R⁷ und eine Sulfogruppe -SO₃M in der allgemeinen Formel (2) enthalten, sind beispielsweise 2-Methoxy-5-sulfo-phenyl, 2,5-Dimethoxy-4-sulfo-phenyl, 2-Methoxy-4-sulfo-phenyl, 4-Methoxy-5-sulfo-phenyl, 2,4-Dimethoxy-5-sulfo-phenyl, 2-Methoxy-5-methyl-4-sulfo-phenyl, 2-Methyl-5-sulfo-phenyl, 2,5-Dimethyl-4-sulfo-phenyl, 2,6-Dimethyl-4-sulfo-phenyl, 4-Methyl-3-sulfo-phenyl und insbesondere 4-Sulfophenyl und 3-Sulfo-phenyl.

Bevorzugt ist in den allgemeinen Formeln (1) und (2) der Rest D¹ und D² ein Benzolkern, und R¹, R², R⁴ und R⁵ sind im Falle, daß D¹ und D² ein Benzolkern ist, jedes bevorzugt Wasserstoff. R¹ und R⁴ sind jedes bevorzugt Wasserstoff und R² und R⁵ jedes bevorzugt Wasserstoff oder Sulfo, falls D¹ und D² einen Naphthalinkern darstellt. Bevorzugt ist weiterhin R³, R⁶ und R⁷ sowie R jedes Wasserstoff.

Im vorstehenden wie im nachstehenden bedeutet eine Sulfogruppe eine Gruppe der allgemeinen Formel -SO₃M , eine Carboxygruppe eine Gruppe der allgemeinen Formel -COOM , eine Sulfatogruppe eine Gruppe der allgemeinen Formel -OSO₃M und eine Thiosulfatogruppe eine Gruppe der allgemeinen Formel -S-SO₃M , jeweils mit M der obengenannten Bedeutung.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 5 Gew.-%, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen aus den obengenannten europäischen Patentanmeldungs-Veröffentlichungen bekannten Farbstoffe in den erforderlichen Anteilen oder durch Synthese mittels der üblichen Diazotierungs- und Kupplungsreaktionen und Umsetzungsreaktionen mit der Halogentriazinkomponente unter Verwendung von entsprechenden Mischungen solcher Komponenten in einer dem Fachmann geläufigen Weise und mit den hierzu erforderlichen Mengenanteilen. So kann man beispielsweise in der Weise vorgehen, daß man eine oder mehrere, wie zwei oder drei, Azoverbindungen der allgemeinen Formel (3A) und eine oder mehrere, wie zwei oder drei, Azoverbindungen der allgemeinen Formel (3B) 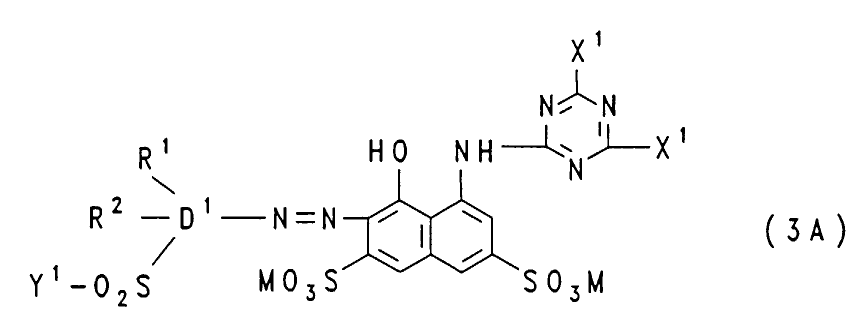 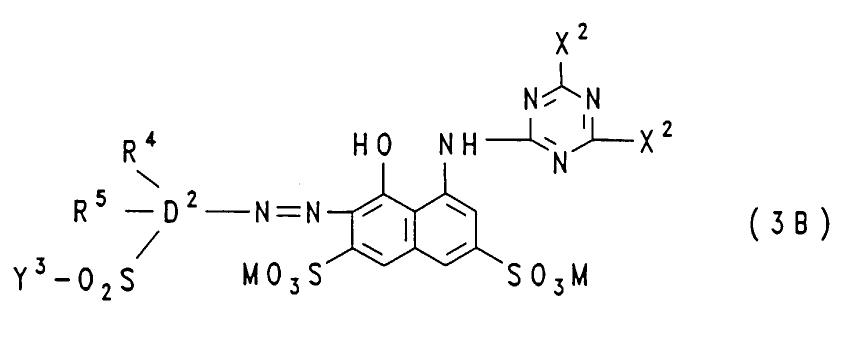 in welchen M, D¹, R¹, R², Y¹, D², R⁴, R⁵, Y³, X¹ und X² die obengenannten Bedeutungen haben, in Mischung mit einer oder mehreren, wie zwei oder drei, Aminoverbindungen der allgemeinen Formel (4A) und einer oder mehreren, wie zwei oder drei, Aminoverbindungen der allgemeinen Formel (4B) 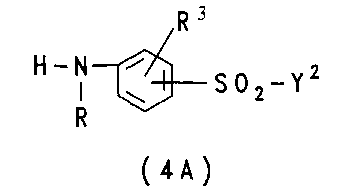 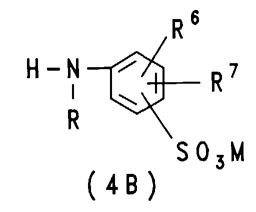 in welchen R, R³, Y², R⁶, R⁷ und M die obengenannten Bedeutungen haben, in an und für sich bekannter Verfahrensweise, wie beispielsweise bei einer Temperatur zwischen 10 und 60°C, bevorzugt zwischen 20 und 30°C, und einem pH-Wert zwischen 2 und 8, bevorzugt zwischen 4 und 5, umsetzt, oder daß man eine oder mehrere, wie zwei oder drei, Azoverbindungen der allgemeinen Formel (5) 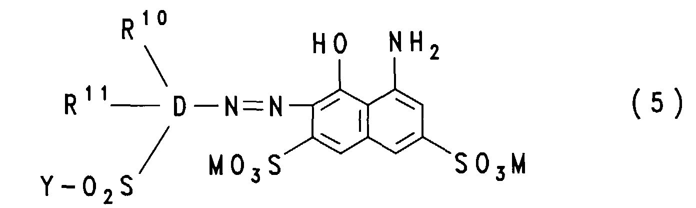 in welcher M die obengenannte Bedeutung besitzt, Y eine der Bedeutungen von Y¹ oder Y³ hat, R¹⁰ eine der Bedeutungen von R¹ oder R⁴ besitzt, R¹¹ eine der Bedeutungen von R² oder R⁵ hat und D eine der Bedeutungen von D¹ oder D² besitzt, in Mischung mit einer oder mehreren, wie zwei oder drei, Verbindungen der allgemeinen Formel (6A) und mit einer oder mehreren, wie zwei oder drei, Verbindungen der allgemeinen Formel (6B) 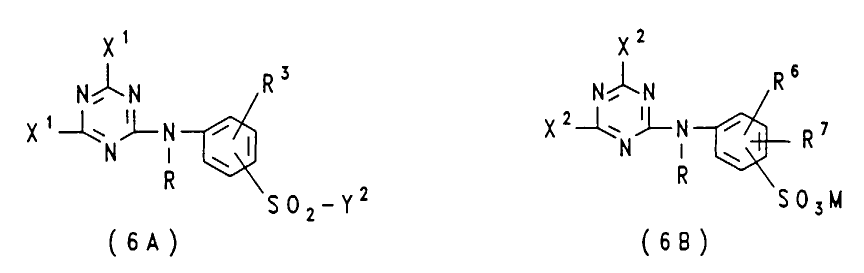 in welchen X¹, X², R, Y², R³, R⁶, R⁷ und M die obengenannten Bedeutungen haben, in an und für sich bekannter Verfahrensweise, beispielsweise bei einer Temperatur zwischen 20 und 60°C, bevorzugt zwischen 40 und 50°C, und bei einem pH-Wert zwischen 3 und 7, bevorzugt zwischen 4 und 5, umsetzt, oder daß man eine oder mehrere, wie zwei oder drei, Verbindungen der allgemeinen Formel (7A) 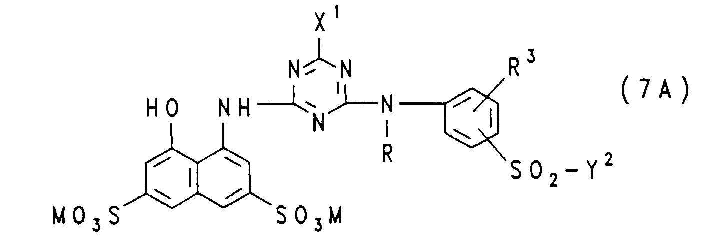 in welcher M, X¹, R, R³ und Y² die obengenannten Bedeutungen haben, und eine oder mehrere, wie zwei oder drei, Verbindungen der allgemeinen Formel (7B) 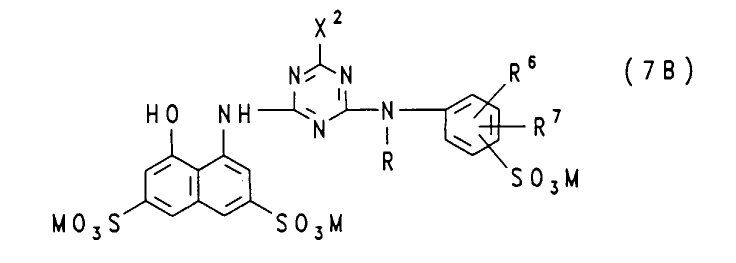 in welcher M, X², R, R⁶ und R⁷ die obengenannten Bedeutungen haben, in Mischung mit einem oder mehreren, wie zwei oder drei, diazotierten Aminoverbindungen der allgemeinen Formel (8) 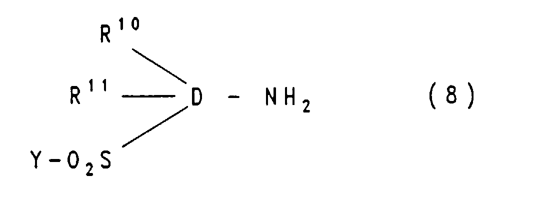 in welcher R¹⁰, R¹¹, Y und D die obengenannten Bedeutungen haben, in an und für sich bekannter Verfahrensweise, wie beispielsweise bei einer Temperatur zwischen 0 und 30°C, bevorzugt zwischen 10 und 20°C, und bei einem pH-Wert zwischen 3 und 7,5, bevorzugt zwischen 4,5 und 6,5, kuppelt.

Ausgangsverbindungen der allgemeinen Formel (8) sind beispielsweise 3-(β-Sulfatoethylsulfonyl)-anilin, 4-(β-Sulfatoethylsulfonyl)-anilin, 2-Methyl-5-(β-sulfatoethylsulfonyl)-anilin, 2-Methoxy-5-(β-sulfatoethyl-sulfonyl)-anilin, 4-Methyl-3-(β-sulfatoethylsulfonyl)-anilin, 2,5-Dimethyl-4-(β-sulfatoethylsulfonyl)-anilin, 2,6-Dimethyl-4-(β-sulfatoethylsulfonyl)-anilin, 2-Methoxy-4-(β-sulfatoethylsulfonyl)-anilin, 4-Methoxy-5-(β-sulfatoethylsulfonyl)-anilin, 2-Methoxy-5-methyl-4-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 6-(β-Sulfatoethylsulfonyl)-1-sulfo-2-amino-naphthalin und 8-(β-Sulfatoethylsulfonyl)-6-sulfo-2-amino-naphthalin, hiervon insbesondere 4-(β-Sulfatoethylsulfonyl)-anilin, sowie Derivate dieser Verbindungen, in welchen die β-Sulfatoethylsulfonyl-Gruppe durch die Vinylsulfonyl- oder β-Thiosulfatoethylsulfonyl- oder β-Chlorethylsulfonyl-Gruppe ausgetauscht ist.

Die Ausgangsverbindungen der allgemeinen Formeln (3A) und (3B) lassen sich in bekannter Verfahrensweise herstellen, indem man eine Aminoverbindung der allgemeinen Formel (8) mit einer 1-(Dihalogeno-s-triazinyl)-amino-3,6-disulfo-8-naphthol-Verbindung umsetzt oder eine Azoverbindung der allgemeinen Formel (5) mit einem Trihalogen-s-triazin umsetzt.

Ausgangsverbindungen der allgemeinen Formeln (6A) und (6B) lassen sich in an und für sich bekannter Verfahrensweise herstellen, indem man ein Trihalogen-s-triazin mit einer Aminoverbindung der allgemeinen Formel (9) bzw. (10) 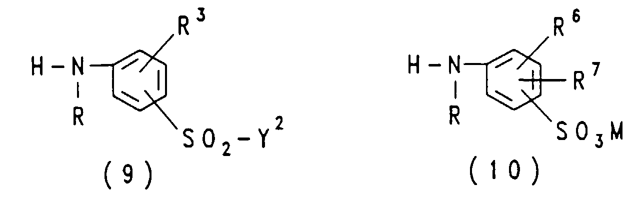 in welchen R, R³, Y², R⁶, R⁷ und M die obengenannten Bedeutungen haben, umsetzt.

Trihalogen-s-triazin-Verbindungen sind insbesondere Trichlor-s-triazin (Cyanurchlorid) und Trifluor-s-triazin (Cyanurfluorid).

Aminoverbindungen der allgemeinen Formel (9) sind beispielsweise 3-(β-Sulfatoethylsulfonyl)-anilin, 2-Methoxy-5-(β-sulfatoethylsulfonyl)-anilin, 2,5-Dimethoxy-4-(β-sulfatoethylsulfonyl)-anilin, 2-Methoxy-4-(β-sulfatoethylsulfonyl)-anilin, 4-Methoxy-5-(β-sulfatoethylsulfonyl)-anilin, 2,4-Dimethoxy-5-(β-sulfatoethylsulfonyl)-anilin, 2-Methoxy-5-methyl-4-(β-sulfatoethylsulfonyl)-anilin, 2-Methyl-5-(β-sulfatoethylsulfonyl)-anilin, 2,5-Dimethyl-4-(β-sulfatoethylsulfonyl)-anilin, 2,6-Dimethyl-4-(β-sulfatoethylsulfonyl)-anilin, 4-Methyl-3-(β-sulfatoethyl-sulfonyl)-anilin und insbesondere 4-(β-Sulfatoethylsulfonyl)-anilin sowie die Derivate dieser Verbindungen, in welchen die β-Sulfatoethylsulfonyl-Gruppe durch die Vinylsulfonyl- oder β-Thiosulfatoethylsulfonyl- oder die β-Chlorethylsulfonyl-Gruppe ausgetauscht ist.

Aminoverbindungen der allgemeinen Formel (10) sind beispielsweise 2-Methoxy-5-sulfo-anilin, 2,5-Dimethoxy-4-sulfo-anilin, 2-Methoxy-4-sulfo-anilin, 4-Methoxy-5-sulfo-anilin, 2,4-Dimethoxy-5-sulfo-anilin, 2-Methoxy-5-methyl-4-sulfo-anilin, 2-Methyl-5-sulfo-anilin, 2,5-Dimethyl-4-sulfo-anilin, 2,6-Dimethyl-4-sulfo-anilin, 4-Methyl-3-sulfo-anilin und insbesondere 4-Sulfo-anilin und 3-Sulfo-anilin.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen können weitere faserreaktive Farbstoffe, die zum Nuancieren der Farbstoffmischung dienen, in einer Menge von bis zu 5 Gew.-% enthalten. Diese "Nuancierfarbstoffe" können durch übliches Vermischen hinzugefügt oder aber auch auf chemischem Wege im selben Reaktionsansatz zusammen mit der oben beschriebenen Synthese einer erfindungsgemäßen Farbstoffmischung hergestellt und in die Farbstoffmischung eingebracht werden, wenn eine oder mehrere der Komponenten des Nuancierfarbstoffes mit den Komponenten der Farbstoffe der Formeln (1) und/oder (2) identisch sind. So kann man zur Herstellung einer erfindungsgemäßen Farbstoffmischung mit dem Gehalt eines Nuancierfarbstoffes mit bestimmtem Chromophor beispielsweise solche zusätzlichen Ausgangsverbindungen in den Reaktionsansatz einsetzen, die anstelle der 3,6-Disulfo-1-amino-8-naphthol-Komponente der Farbstoffe (1) und (2) als Komponente das 4,6-Disulfo-1-amino-8-naphthol oder 2- oder 3-Amino-6-sulfo-8-naphthol oder eine 1-(Aminophenyl)-3-carboxy- oder -3-methyl-5-pyrazolon enthalten.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen der erfindungsgemäßen Farbstoffmischungen, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig-beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat,
Natriumdihydrogenphosphat, Dinatriumhydrogenphosphat, Natriumtrichloracetat, Wasserglas oder Trinatriumphosphat.

Die erfindungsgemäßen Farbstoffmischungen zeichnen sich auf den Cellulosefasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperaturvon etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, klare, gelbstichig bis blaustichig rote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

a) In eine Suspension aus 319,2 Teilen 1-Amino-8-naphthol-3,6-disulfonsäure in 1000 Teilen Wasser und 300 Teilen Eis werden unter gutem Rühren 190,1 Teile Cyanurchlorid eingetragen; der Reaktionsansatz wird noch vier Stunden zwischen 0 und 15°C und mittels Natriumbicarbonat bei einem pH-Wert zwischen 1,7 und 2,2 weitergerührt.
b) Getrennt hiervon wird das Diazoniumsalz der Diazokomponente hergestellt: Eine Lösung mit einem pH-Wert von 6,7 bis 6,8 von 281,4 Teilen 4-(β-Sulfatoethylsulfonyl)-anilin in 500 Teilen Wasser werden mit 183 Teilen einer 38 %igen wäßrigen Natriumnitritlösung versetzt. Dieses Gemisch wird unter gutem Rühren in eine Mischung aus 800 Teilen zerkleinertem Eis und 215 Teilen einer 96 %igen wäßrigen Schwefelsäure einfließen lassen. Man rührt noch eine Stunde bei einer Temperatur zwischen 0°C und 5°C nach und zersetzt sodann, wie üblich, überschüssige salpetrige Säure mit wenig Amidosulfonsäure.
c) Das unter a) hergestellte primäre Kondensationsprodukt aus Cyanurchlorid und der Aminonaphtholdisulfonsäure wird mit der unter b) beschriebenen Diazoniumsalzlösung vereinigt. Zur Durchführung der Kupplungsreaktion wird das stark saure Reaktionsgemisch bei einer Temperatur von etwa 15°C mittels Natriumcarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.
d) Die Lösung der Monoazoverbindung von c) wird mit einer Lösung mit einem pH-Wert von 5,5 bis 6,0 von 133,0 Teilen 4-(β-Sulfatoethylsulfonyl)-anilin und 86,5 Teilen Anilin-4-sulfonsäure in 640 Teilen Wasser vereinigt. Der pH-Wert wird auf etwa 5 gehalten und das Reaktionsgemisch im Verlaufe von ein bis zwei Stunden auf eine Temperatur von 60 bis 65°C erwärmt. Sodann wird mittels Natriumcarbonat ein pH-Wert zwischen 6,0 und 6,5 eingestellt, der Ansatz klärfiltriert und das Filtrat sprühgetrocknet.

Es werden etwa 1350 Teile eines Elektrolytsalz (vorwiegend Natriumchlorid und Natriumsulfat) haltigen Pulvers erhalten, das zu etwa 35 % das Natriumsalz der Verbindung der Formel (A) 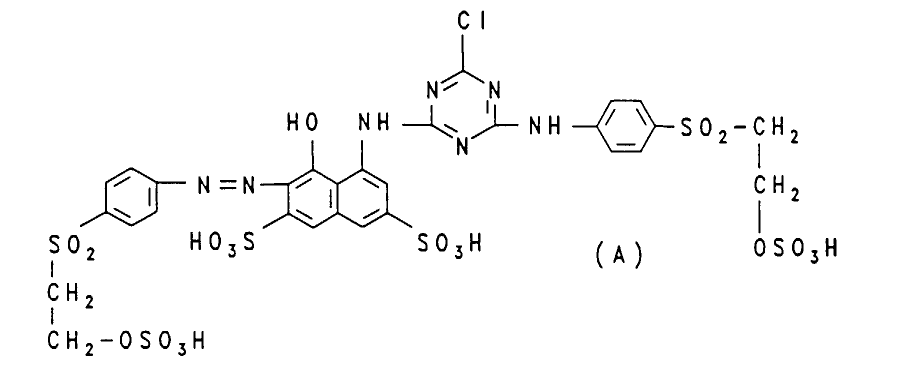 und zu etwa 35 % das Natriumsalz der Verbindung der Formel (B) 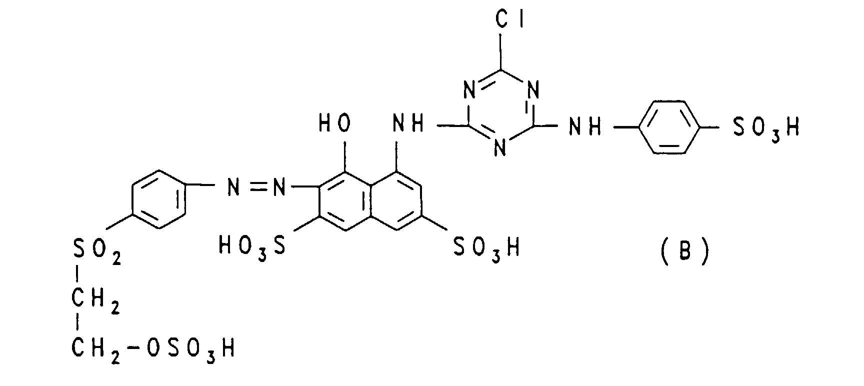 enthält. Diese Mischung zeigt sehr gute Farbstoffeigenschaften und liefert nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke rote Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad und guten Aufbau auf den Cellulosematerialien aus.

### Beispiel 2

Man trägt unter gutem Rühren 19,4 Teile Cyanurchlorid und 31,9 Teile 1-Amino-8-naphthol-3,6-disulfonsäure schnell in eine Mischung aus 330 Teilen Wasser und 40 Teilen Eis ein, rührt den Ansatz noch etwa 3,5 Stunden bei einem pH-Wert zwischen 1,5 und 2,0 und einer Temperatur zwischen 10 und 15°C weiter und klärt die Lösung dieses primären Kondensationsproduktes mittels Kieselgur und Filtration.
Man vereinigt die Lösung mit einer auf üblichem Wege durch Diazotierung mittels Natriumnitrit und Schwefelsäure in wäßrigem Medium hergestellten Suspension des Diazoniumsalzes aus 41,1 Teilen 6-(β-Sulfatoethylsulfonyl)-2-amino-naphthalin-1-sulfonsäure, stellt das stark saure Kupplungsgemisch sodann bei einer Temperatur von etwa 10°C auf einen pH-Wert von 4,0 bis 4,5 mittels Calciumcarbonat und rührt noch einige Stunden bei 10 bis 14°C und innerhalb dieses pH-Bereiches weiter.
Sodann gibt man eine Lösung mit einem pH-Wert von 5 von 16,1 Teilen N-Ethyl-4-(β-sulfatoethylsulfonyl)-anilin und 9,1 Teilen Anilin-3-sulfonsäure in 100 Teilen Wasser hinzu, rührt den Ansatz zwei bis drei Stunden bei einer Temperatur von 18 bis 22°C, erwärmt ihn dann auf 50 bis 55°C und hält ihn unter Konstanthaltung des pH-Wertes von 4,0 bis 4,5 mittels Calciumcarbonat während 30 Minuten bei dieser Temperatur. Man rührt noch einige Stunden bei 18 bis 20°C nach, saugt das Calciumsulfat ab, wäscht es mit Wasser nach und fällt in diesem vereinigten Filtrat und Waschwasser die Calciumionen mittels Natriumoxalat bei einem pH-Wert von 4,5 bis 5,0 und einer Temperatur von 30°C. Nach einstündigem Rühren filtriert man ab und isoliert die erfindungsgemäße Farbstoffmischung aus dem Filtrat durch Sprühtrocknung.

Man erhält etwa 150 Teile eines dunkelroten Pulvers, das neben Elektrolytsalzen etwa 36 %ig an dem Natriumsalz der Verbindung der Formel (C) 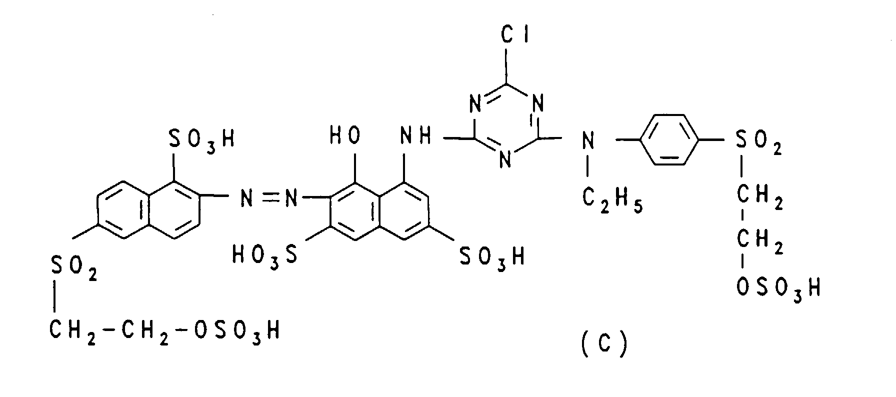 und etwa 36 %ig an dem Natriumsalz der Verbindung der Formel (D) 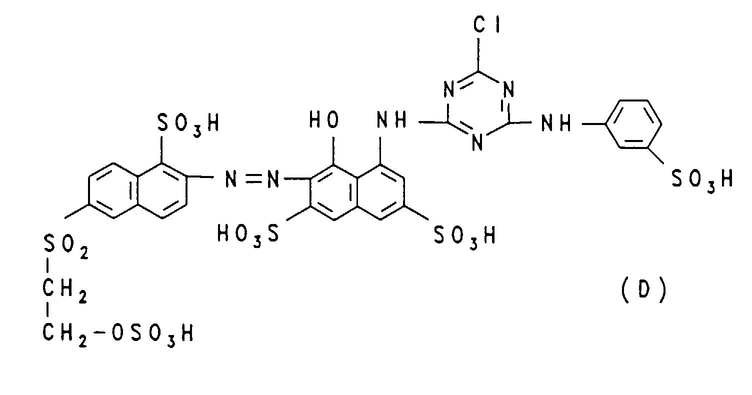 ist. Diese erfindungsgemäße Farbstoffmischung besitzt sehr gute anwendungstechnische Eigenschaften und liefert nach den in der Technik üblichen Druck- und Färbeweisen für faserreaktive Farbstoffe beispielsweise auf Cellulosefasermaterialien farbstarke rote Färbungen und Drucke von sehr guten Fabrikations- und Gebrauchsechtheiten, unter denen die Lichtechtheit, die Wasch-, Schweiß-, Wasser- und Meerwasserechtheiten sowie die Beständigkeit gegen gechlortes Trinkwasser (Chlorbadewasser) besonders erwähnt werden können. Die Fixierquote dieser erfindungsgemäßen Farbstoffmischung auf Cellulosefasermaterialien ist sehr hoch.

### Beispiel 3

In eine Suspension von 195 Teilen Cyanurchlorid in 1000 Teilen Wasser und 500 Teilen Eis werden unter gutem Rühren 92 Teile Anilin-3-sulfonsäure und 149 Teile 4-(β-Sulfatoethylsulfonyl)-anilin eingetragen. Man rührt den Ansatz bis zur Beendigung der Umsetzung bei einem pH-Wert von 2,5 bis 3 und einer Temperatur von 0 bis 10°C etwa drei Stunden weiter.
Danach gibt man unter weiterem Rühren 320 Teile 1-Amino-3,6-disulfo-8-naphthol hinzu, stellt mit Natriumcarbonat einen pH-Wert von 4 bis 5 ein und führt die zweite Kondensationsreaktion bei einer Temperatur von 45°C und einem pH-Wert von etwa 4,5 während drei bis vier Stunden zu Ende.

Der Ansatz wird anschließend auf etwa 10°C abgekühlt und unter weiterem Rühren und unter Einhaltung eines pH-Wertes von 6 und einer Temperatur von 10 bis 15°C mit der äquivalenten Menge der im Beispiel 1b angegebenen Diazoniumsalz-Suspension versetzt. Die nach Beendigung der Kupplungsreaktion erhaltene tiefrote Lösung wird klärfiltriert und das Farbstoffgemisch aus dem Filtrat durch Sprühtrocknung isoliert.

Es werden etwa 1350 Teile eines roten elektrolytsalzhaltigen Pulvers mit dem Gehalt von etwa 35 % des Natriumsalzes der im Beispiel 1 angegebenen Verbindung der Formel (A) und etwa 35 % des Natriumsalzes der im Beispiel 2 angegebenen Verbindung der Formel (D) erhalten.

Diese erfindungsgemäße Farbstoffmischung besitzt sehr gute anwendungstechnische Eigenschaften und liefert nach den in der Technik üblichen Druck- und Färbeweisen für faserreaktive Farbstoffe beispielsweise auf Cellulosefasermaterialien farbstarke rote Färbungen und Drucke mit guter Reproduzierbarkeit und mit guten Fabrikations- und Gebrauchsechtheiten, unter denen die Waschechtheiten besonders erwähnt werden können. Die Fixierquote dieser erfindungsgemäßen Farbstoffmischung auf Cellulosefasermaterialien ist sehr hoch und der Farbaufbau der Färbungen sehr gut.

### Beispiele 4 bis 105

In den nachfolgenden Tabellenbeispielen sind weitere erfindungsgemäße Farbstoffmischungen aus Monoazoverbindungen der allgemeinen Formel (1A) und (2A) 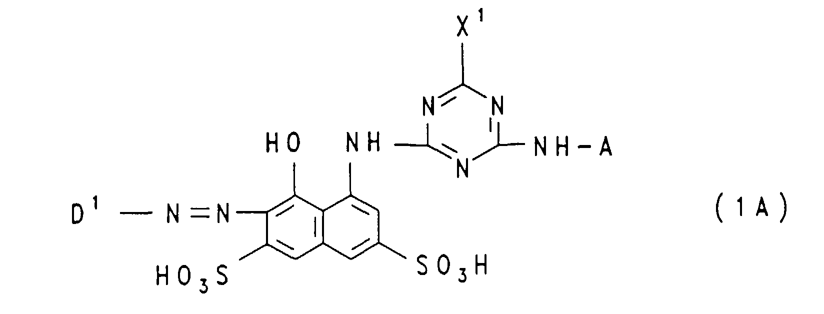 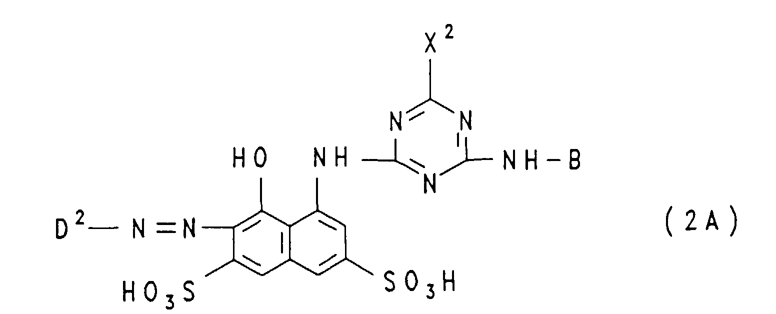 mit Hilfe ihrer Komponenten beschrieben. Sie lassen sich in erfindungsgemäßer Weise entweder durch mechanische Mischung der Einzelfarbstoffe oder aber auf chemischem Wege, beispielsweise analog einem der obigen Ausführungsbeispiele, mit Hilfe ihrer Ausgangskomponenten (Cyanurchlorid, Cyanurbromid oder Cyanurfluorid, einer Aminoverbindung D¹-NH₂ und D²-NH₂ als Diazokomponente, der 1-Amino-8-naphthol-3,6-disulfonsäure als Kupplungskomponente und einer Aminoverbindung der Formel A-NH₂ und B-NH₂) herstellen.
Die erfindungsgemäßen Farbstoffmischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheitseigenschaften und einem guten Farbaufbau in dem in dem jeweiligen Tabellenbeispiel angegebenen Farbton.
Die in der Rubrik MV angegebenen Zahlenverhältnisse geben das Gewichtsverhältnis in Prozent des bzw. der Farbstoffe der Formel (1A) zu dem bzw. den Farbstoffen der Formel (2A) an, in welchem die Farbstoffe in der jeweiligen Farbstoffmischung vorliegen.

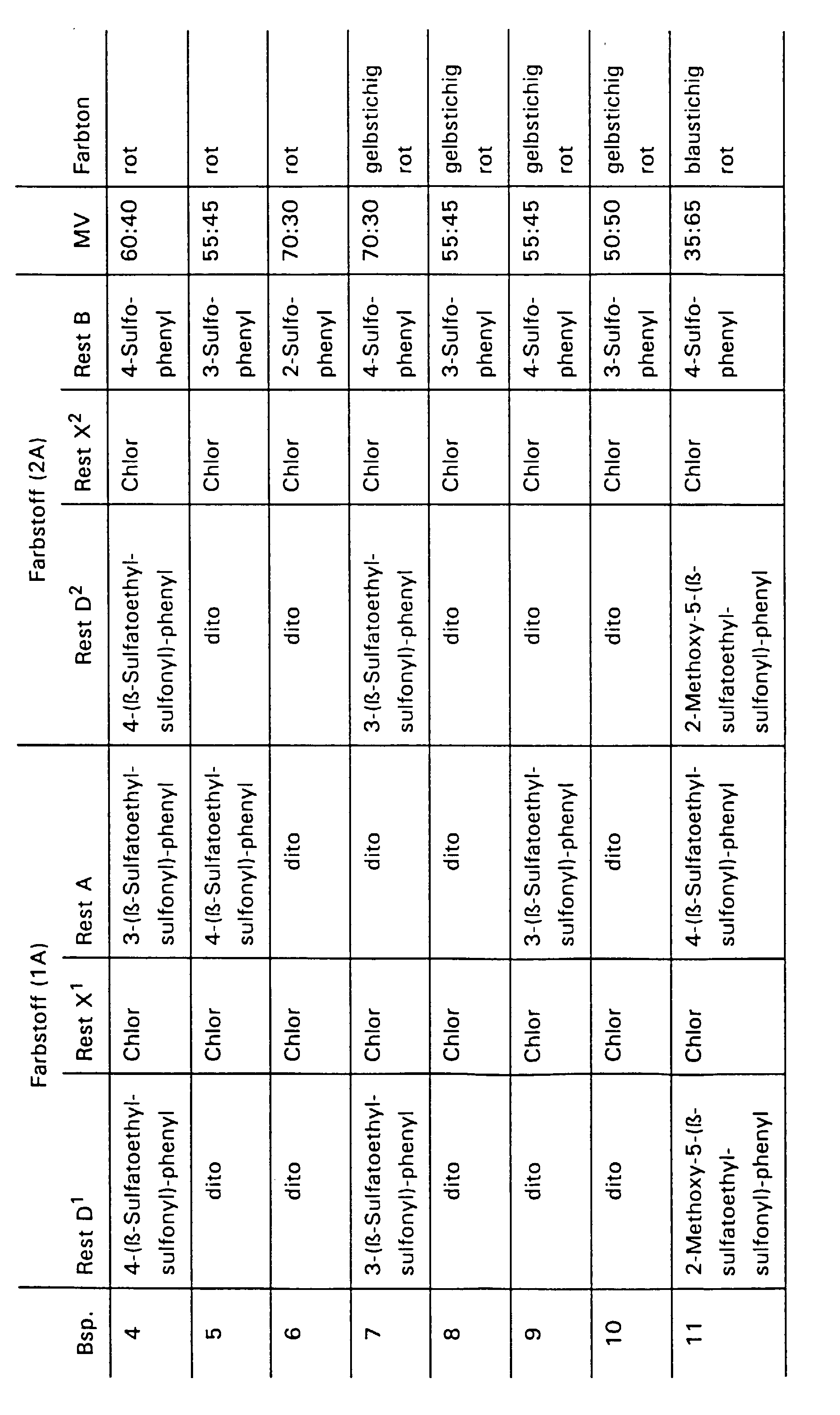

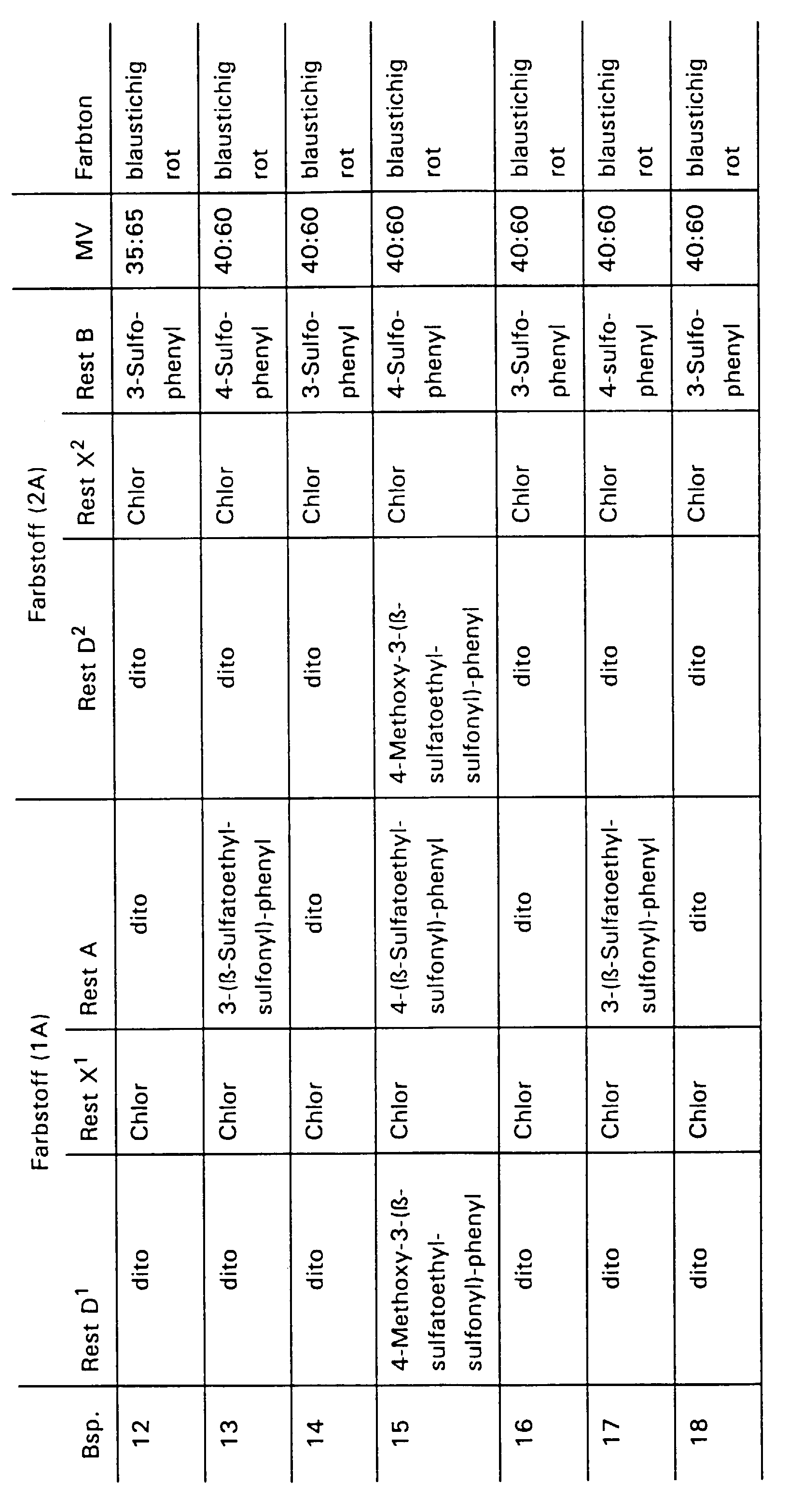

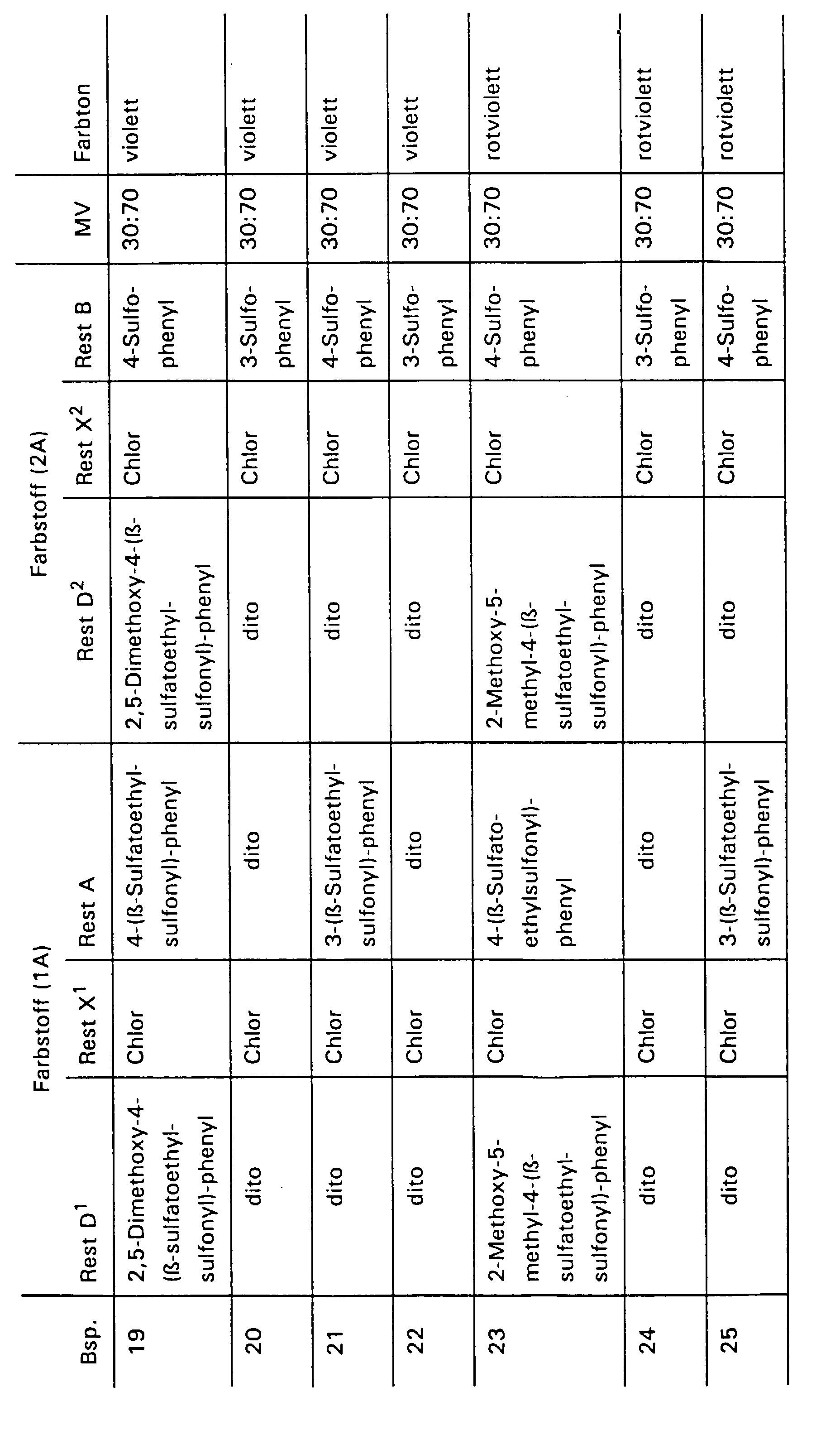

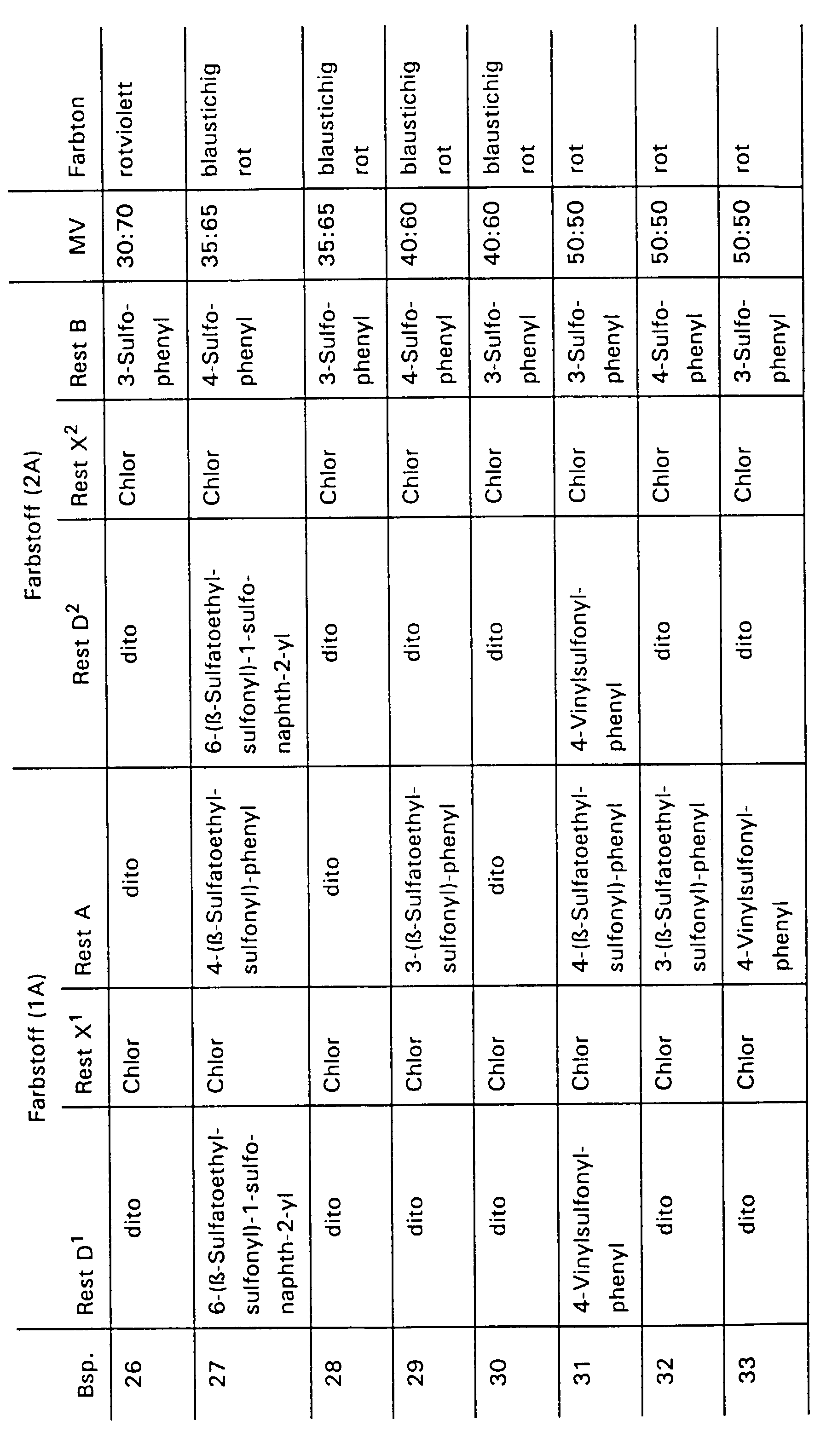

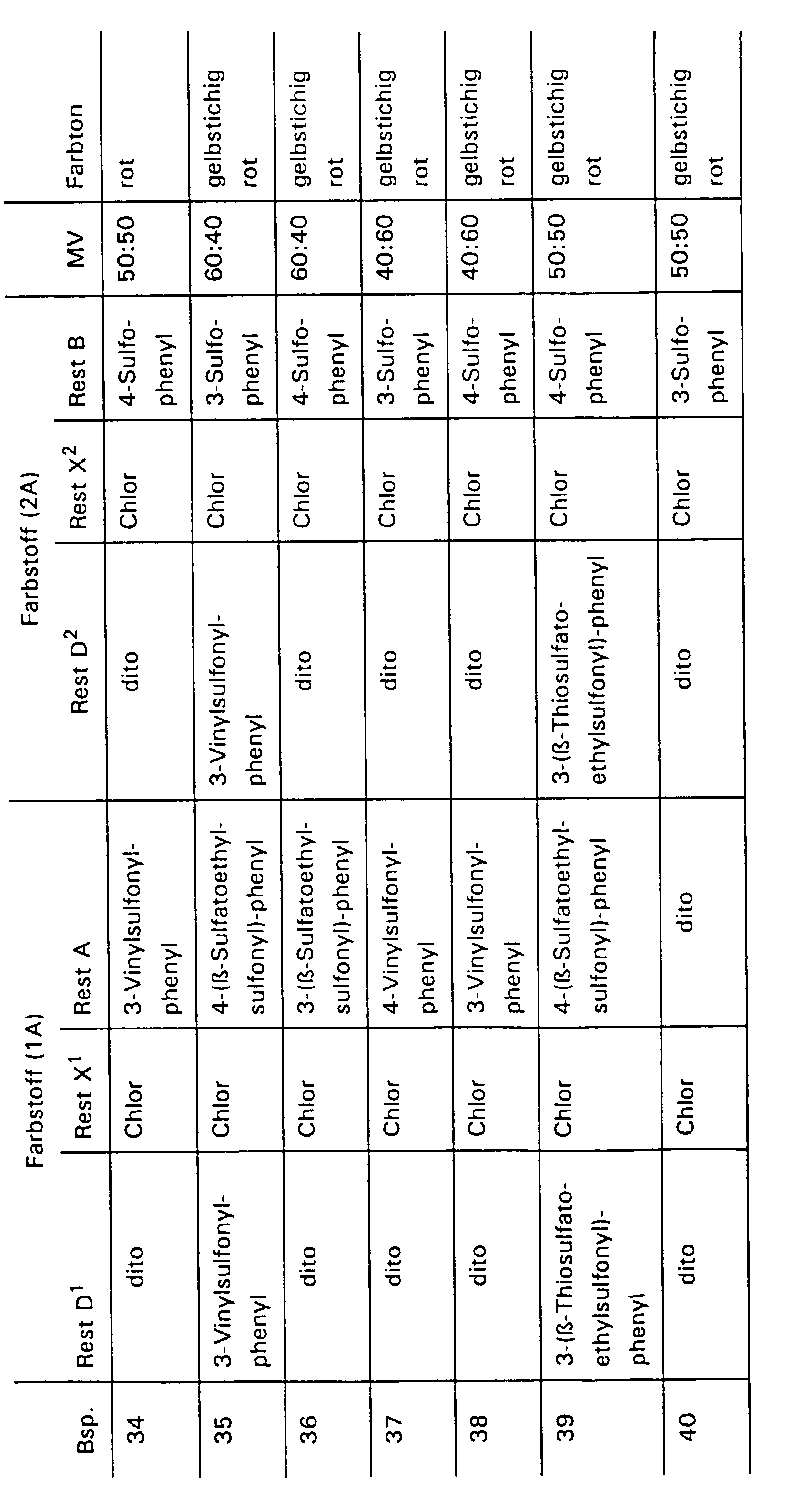

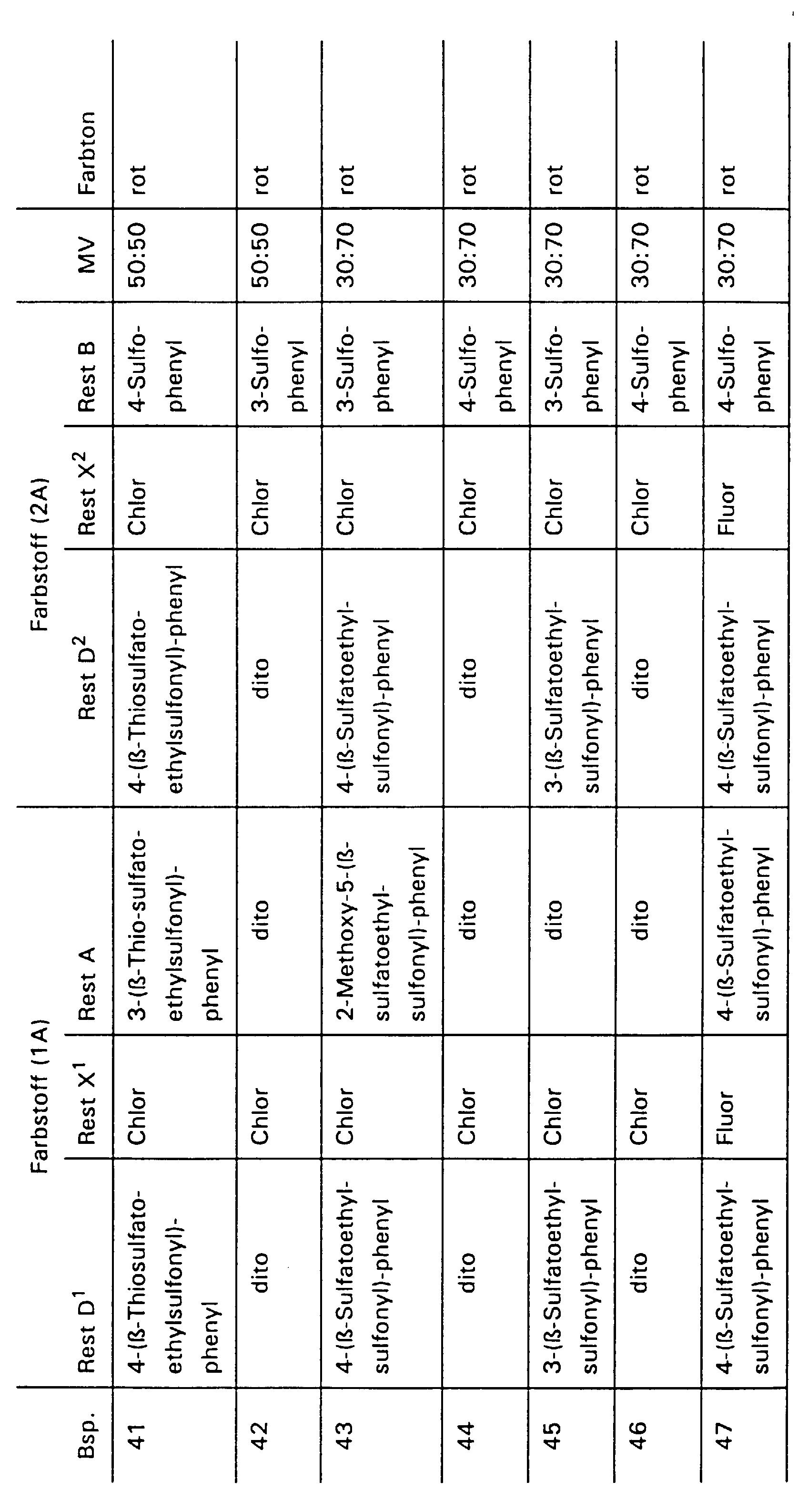

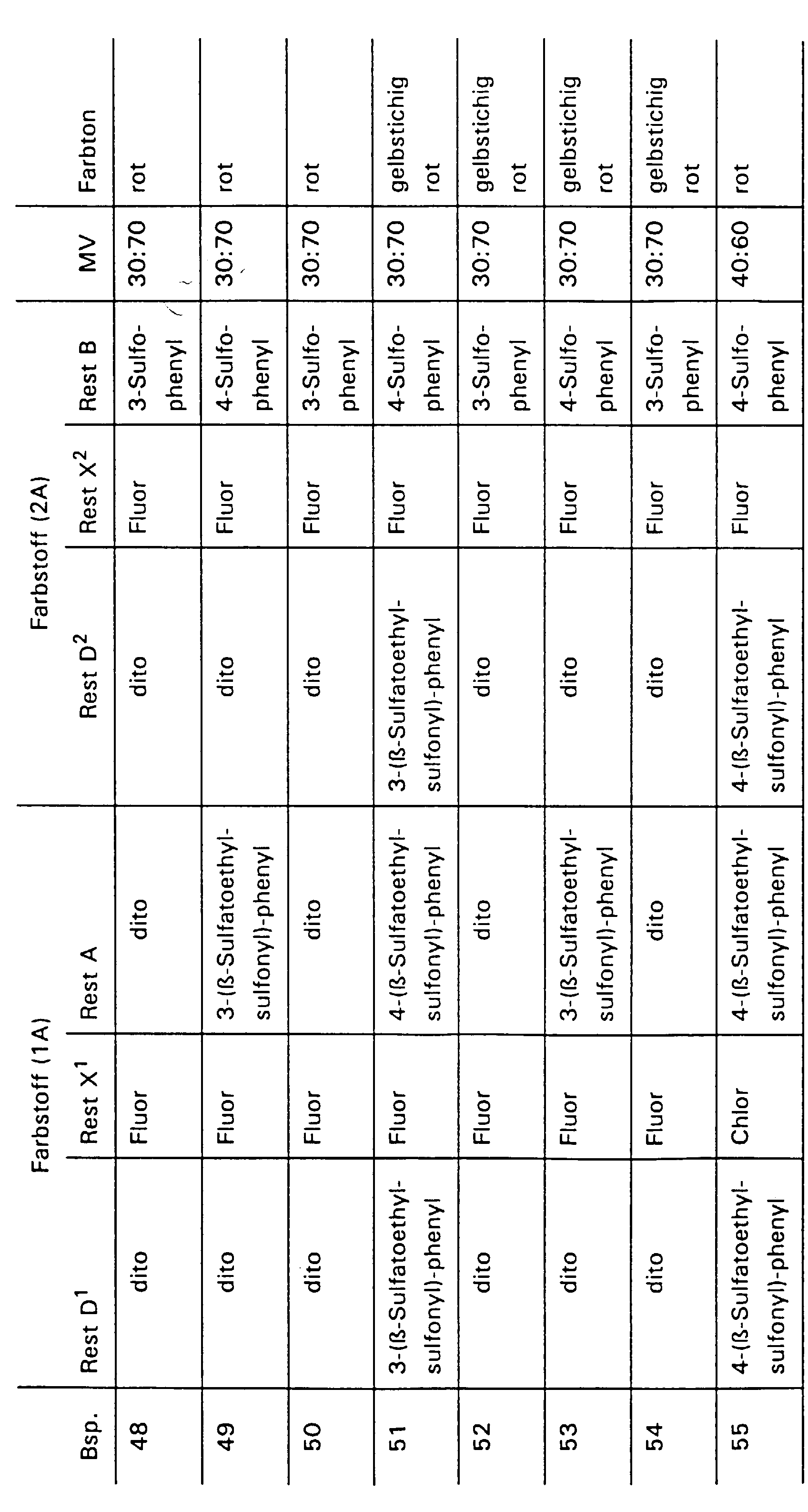

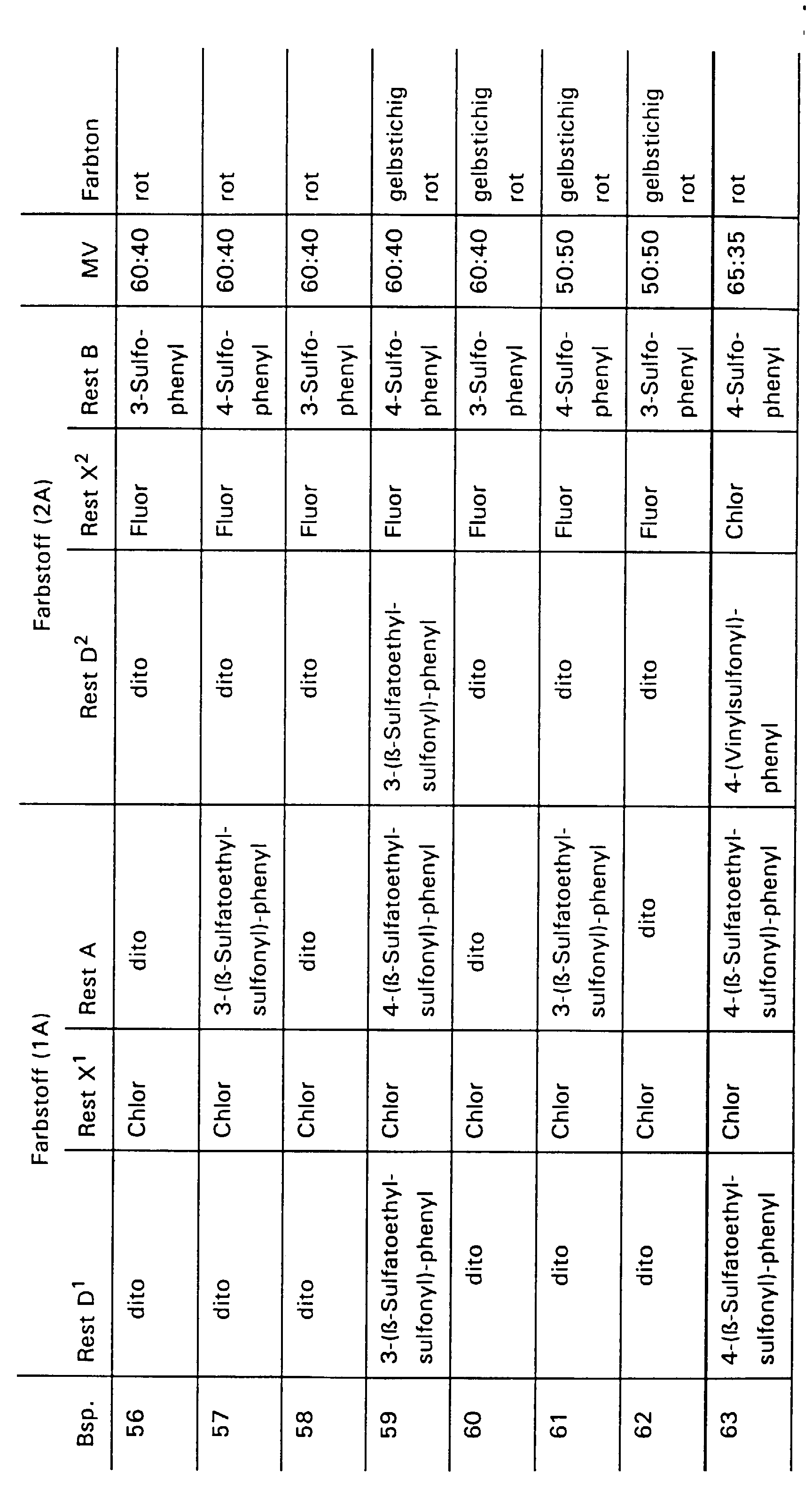

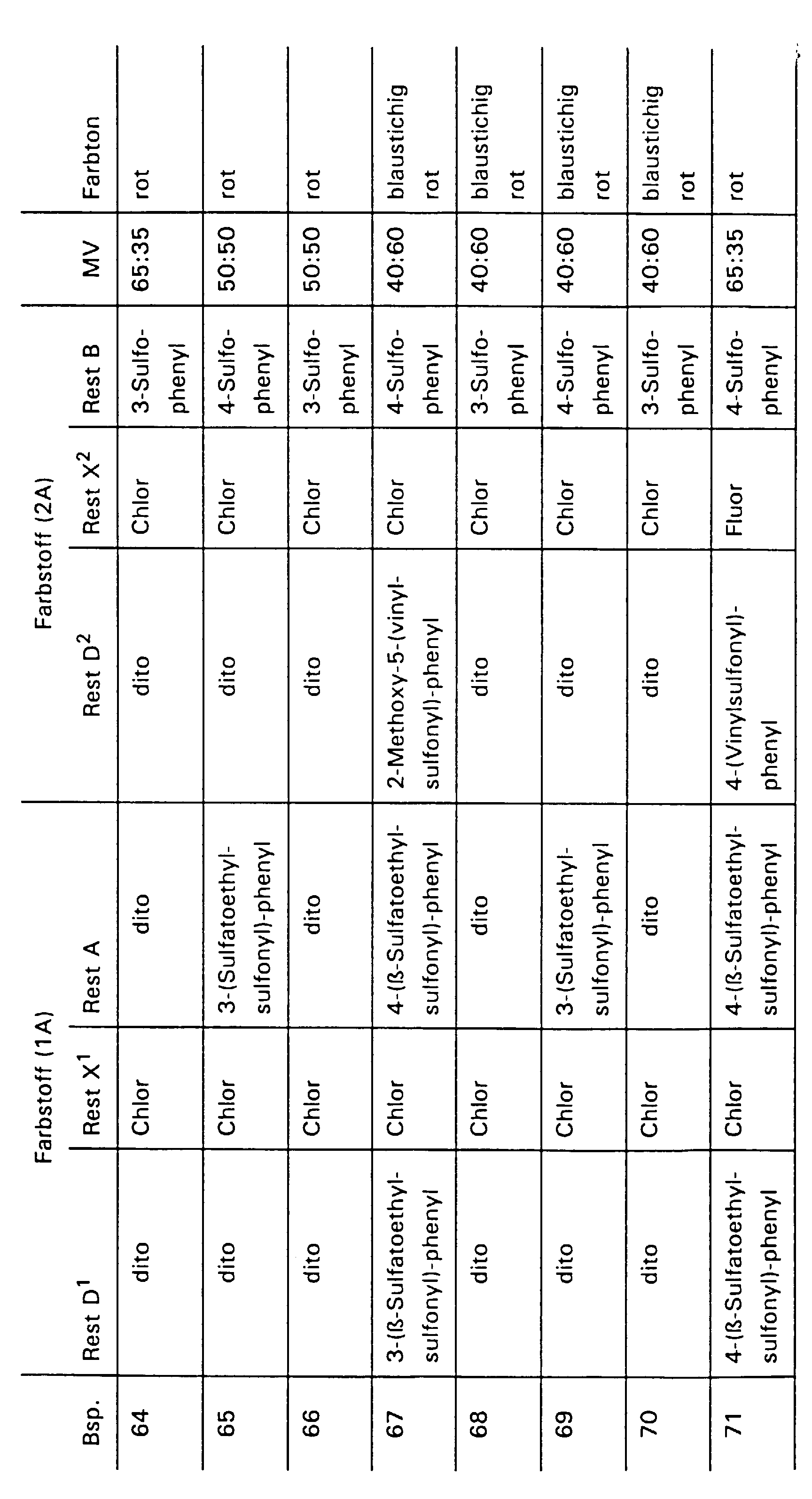

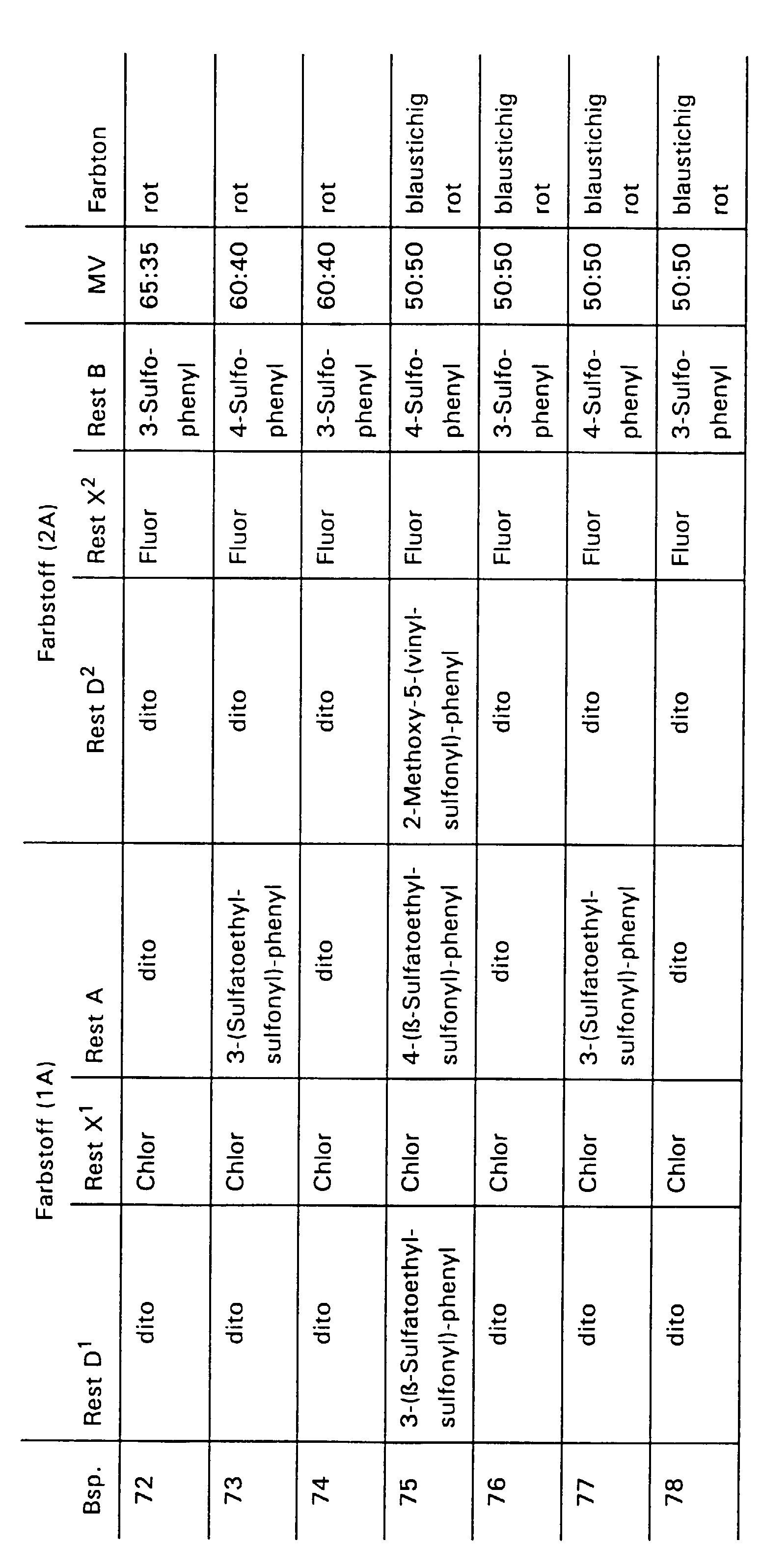

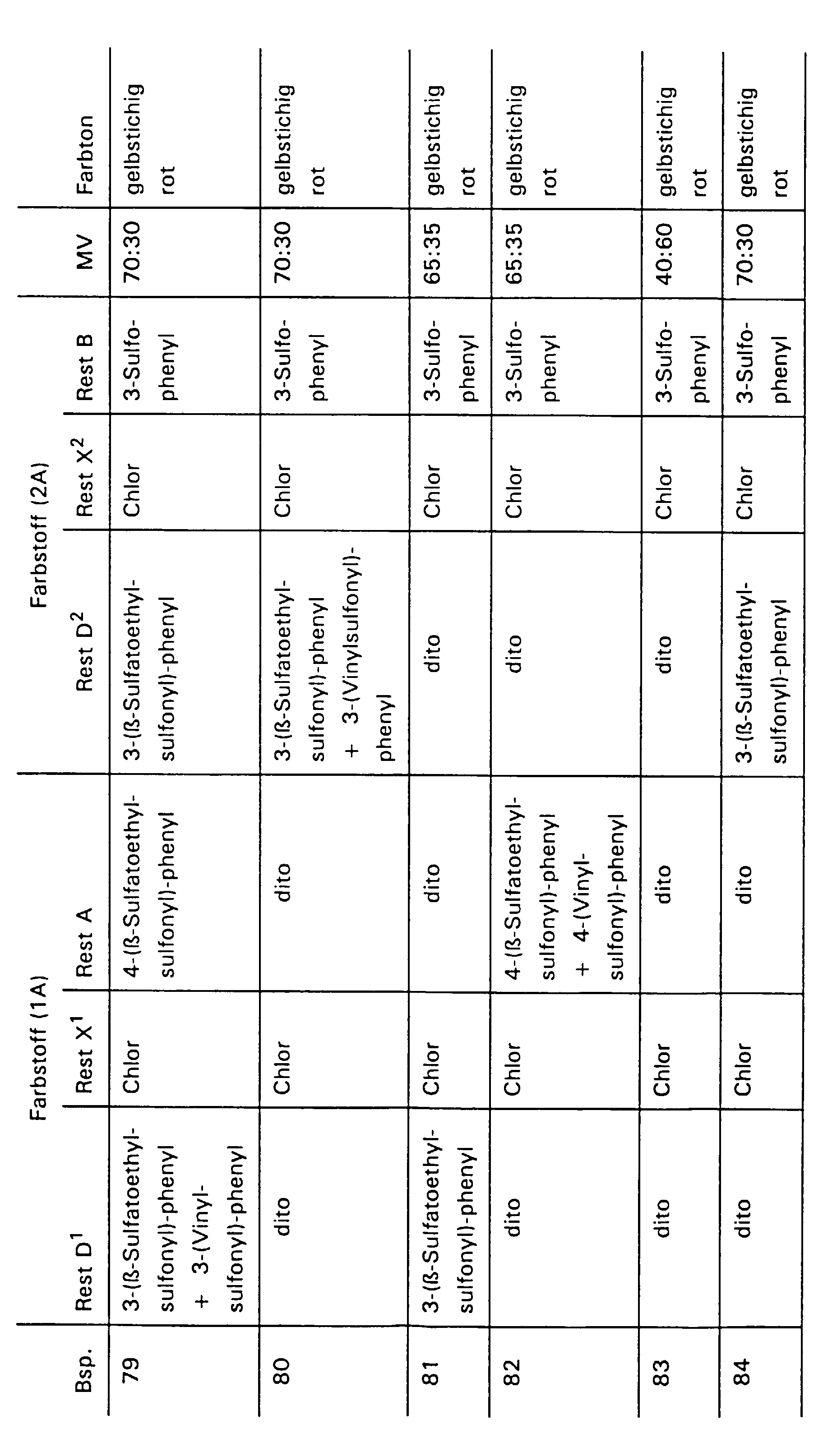

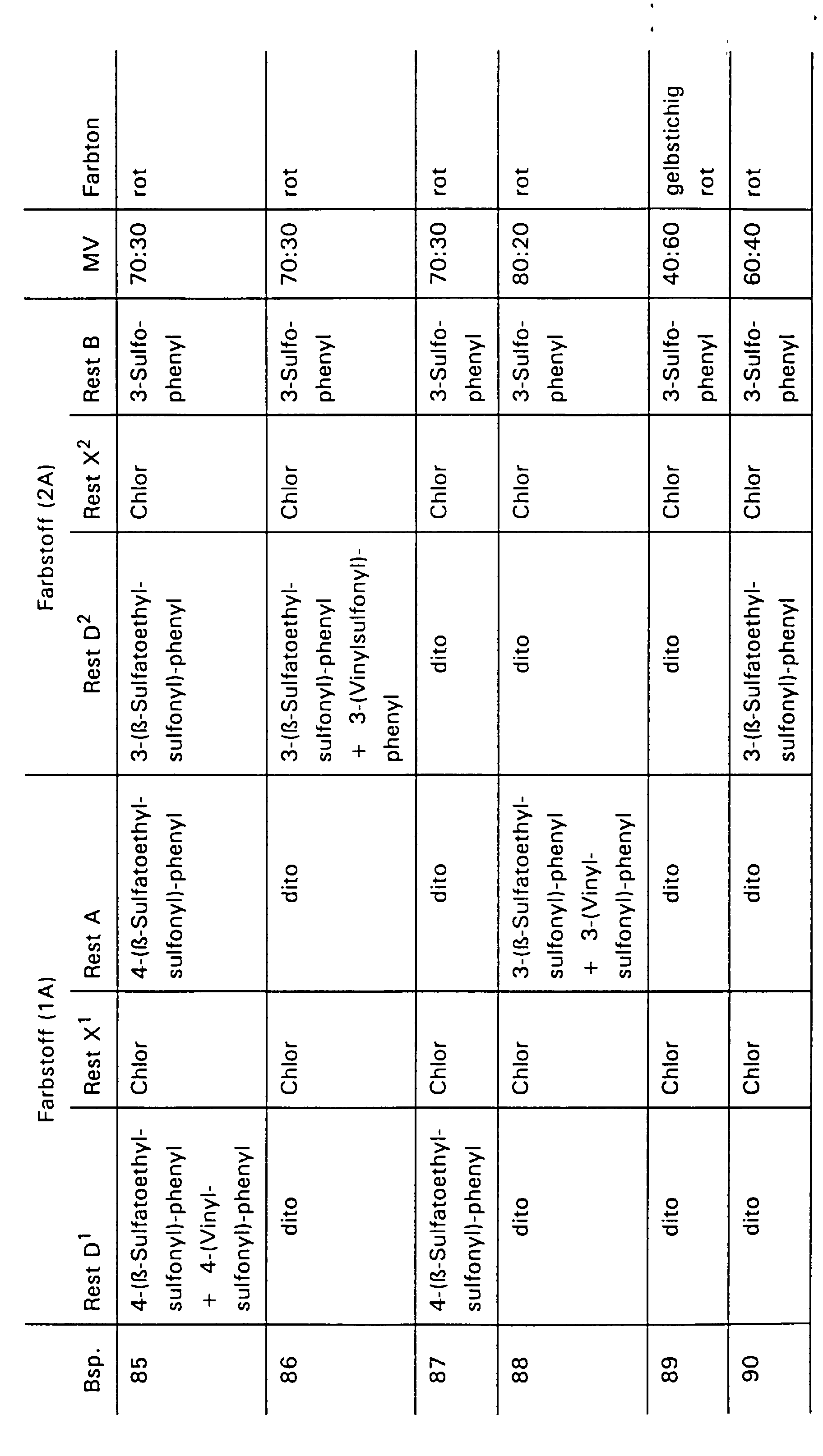

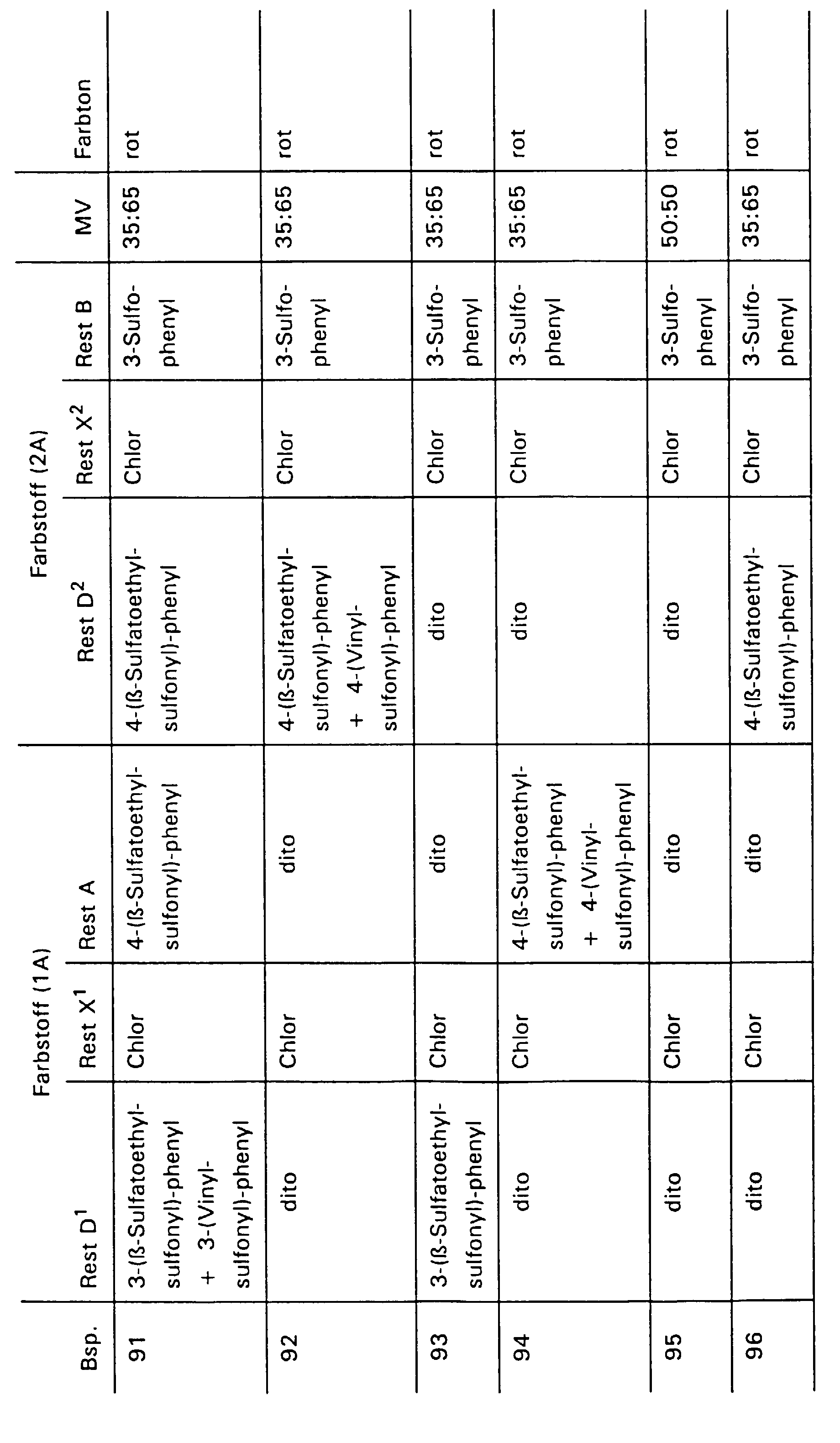

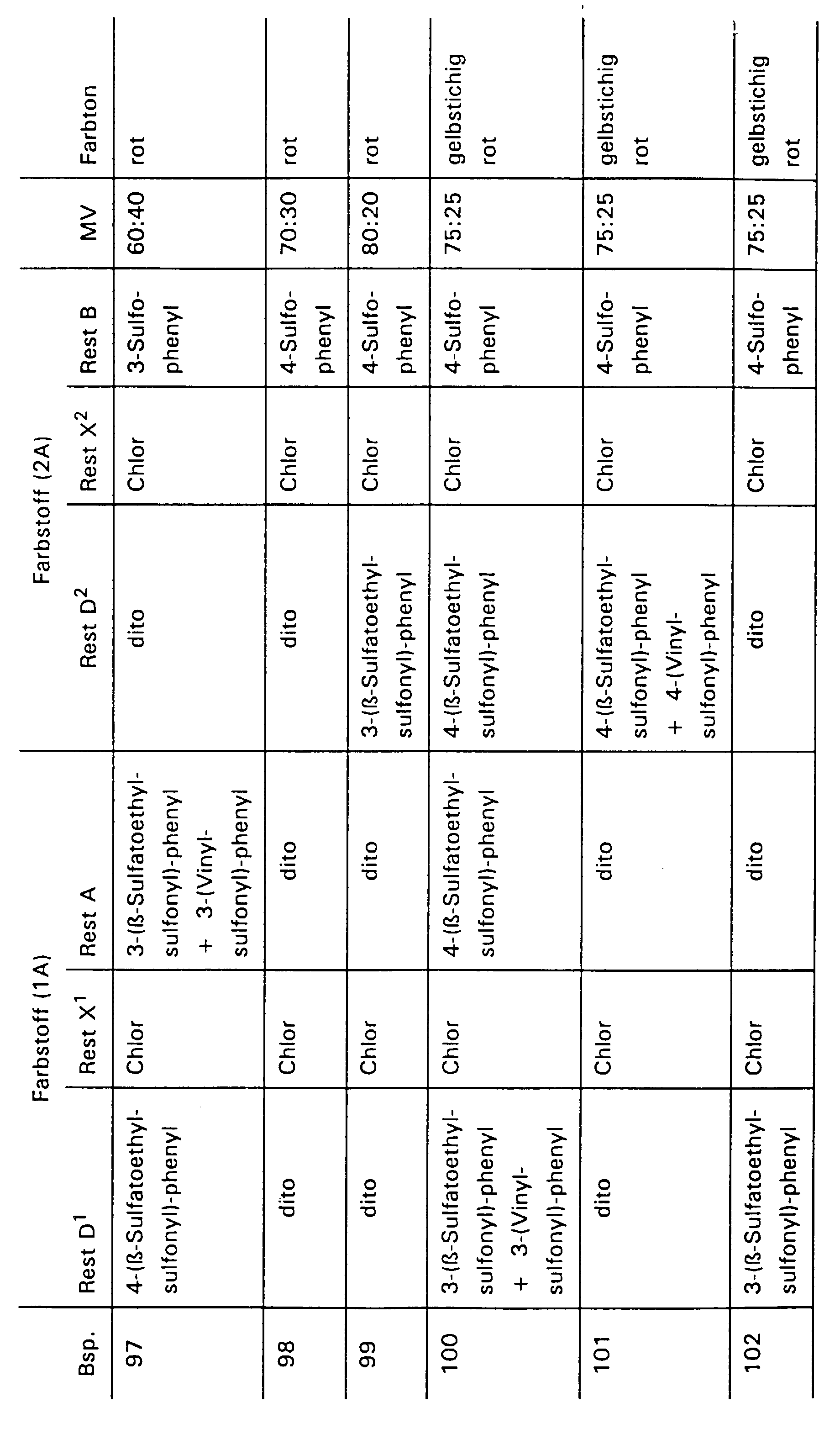

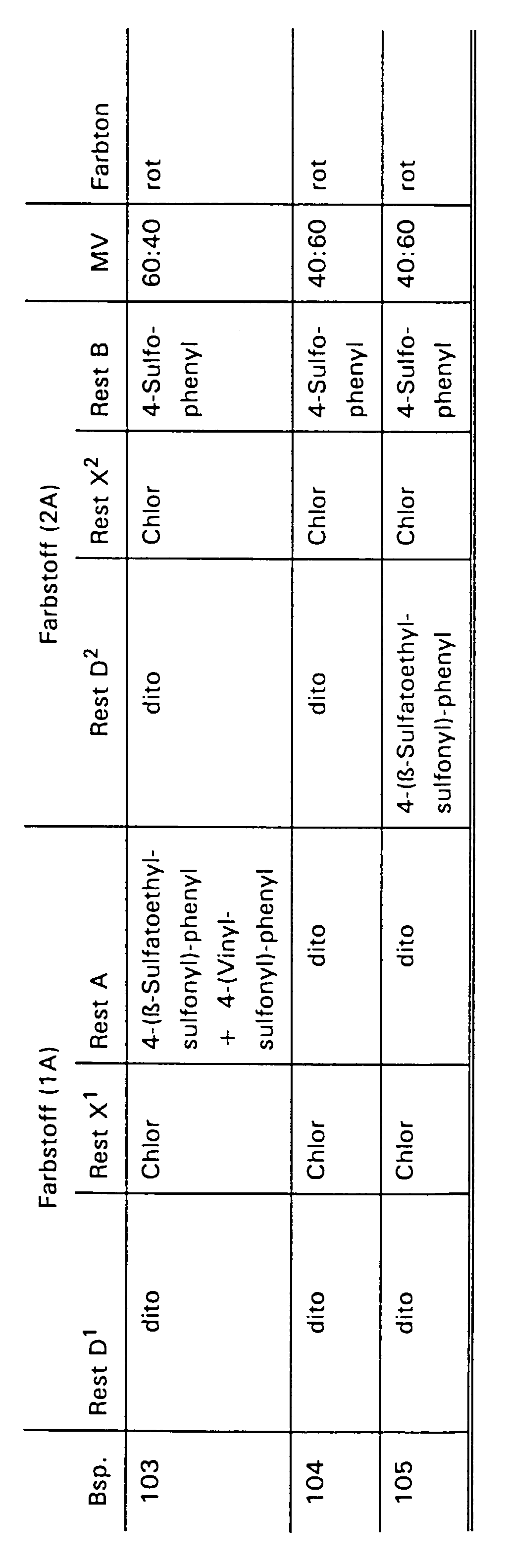

## Patentansprüche

1. Farbstoffmischung, enthaltend einen oder mehrere Azofarbstoffe entsprechend der allgemeinen Formel (1) und einen oder mehrere Azofarbstoffe entsprechend der allgemeinen Formel (2) 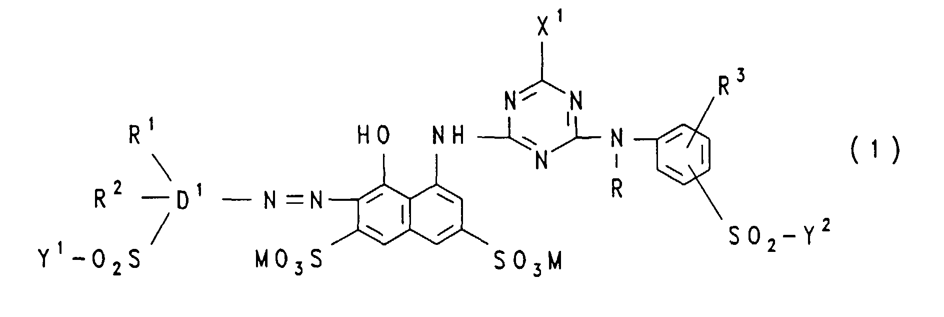 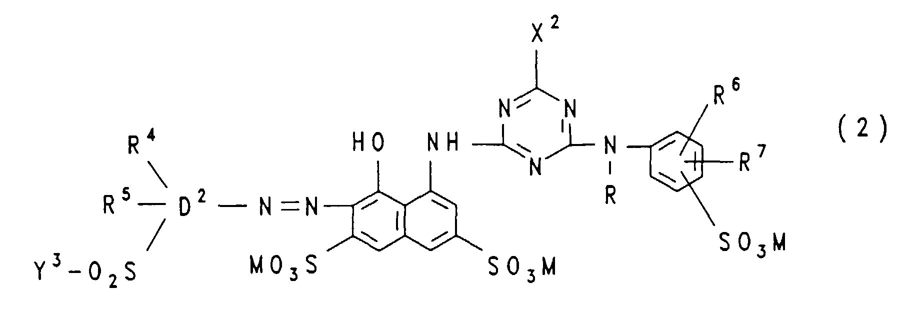 in welchen bedeuten:
M ist Wasserstoff oder ein Alkalimetall oder das stöchiometrische Äquivalent eines Erdalkalimetalls;
D¹ ist der Rest eines Benzol- oder Naphthalinkerns;
D² hat eine der Bedeutungen von D¹;
R¹ ist Wasserstoff, Alkyl von 1 bis 4 C-Atomen oder Alkoxy von 1 bis 4 C-Atomen, falls D¹ oder D² für den Rest eines Benzolkerns steht, oder ist Wasserstoff oder Sulfo, falls D¹ oder D² den Rest eines Naphthalinkerns bedeutet;
R² ist Wasserstoff, Alkyl von 1 bis 4 C-Atomen, Alkoxy von 1 bis 4 C-Atomen oder Sulfo, falls D¹ oder D² für den Rest eines Benzolkerns steht, oder ist Wasserstoff oder Sulfo, falls D¹ oder D² den Rest eines Naphthalinkerns bedeutet;
R³ ist Wasserstoff, Alkyl von 1 bis 4 C-Atomen oder Alkoxy von 1 bis 4 C-Atomen;
R⁴ ist Wasserstoff, Alkyl von 1 bis 4 C-Atomen oder Alkoxy von 1 bis 4 C-Atomen;
R⁵ ist Wasserstoff, Alkyl von 1 bis 4 C-Atomen, Alkoxy von 1 bis 4 C-Atomen oder Sulfo;
R⁶ ist Wasserstoff, Alkyl von 1 bis 4 C-Atomen oder Alkoxy von 1 bis 4 C-Atomen;
R⁷ ist Wasserstoff, Alkyl von 1 bis 4 C-Atomen, Alkoxy von 1 bis 4 C-Atomen oder Sulfo;
R ist Wasserstoff oder Alkyl von 1 bis 4 C-Atomen;
Y¹ ist Vinyl, β-Sulfatoethyl, β-Thiosulfatoethyl oder β-Chlorethyl;
Y² hat eine der Bedeutungen von Y¹;
Y³ hat eine der Bedeutungen von Y¹;
X¹ ist Fluor, Brom oder Chlor;
X² hat eine der Bedeutungen von X¹;
die Gruppen -SO₂-Y¹, -SO₂-Y² und -SO₂-Y³ stehen in meta- oder para-Stellung zur Azogruppe an dem Benzolkern von D¹ und D² bzw. in meta- oder para-Stellung zur Aminogruppe gebunden.

2. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 90:10 Gew.-% bis 10:90 Gew.-%.

3. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 70:30 Gew.-% bis 30:70 Gew.-%.

4. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 55:45 Gew.-% bis 45:55 Gew.-%.

5. Farbstoffmischung nach mindestens einem der Ansprüche 1 bis 4, dadurch gekennzeichnet, daß in den Farbstoffen der Formeln (1) und (2) der Rest R für Wasserstoff steht.

6. Farbstoffmischung nach mindestens einem der Ansprüche 1 bis 5, dadurch gekennzeichnet, daß D¹ und D² beide den Rest eines Benzolkernes bedeuten.

7. Farbstoffmischung nach Anspruch 6, dadurch gekennzeichnet, daß R¹ Wasserstoff, Methoxy oder Methyl ist, R² Wasserstoff oder Methoxy ist, R⁴ Wasserstoff, Methoxy oder Methyl ist, R⁵ Wasserstoff oder Methoxy ist und Y¹ und Y³, unabhängig voneinander, Vinyl oder β-Sulfatoethyl bedeuten.

8. Farbstoffmischung nach mindestens einem der Ansprüche 1 bis 7, dadurch gekennzeichnet, daß X¹ und X² beide Chlor sind.

9. Farbstoffmischung nach mindestens einem der Ansprüche 1 bis 7, dadurch gekennzeichnet, daß X¹ und X² beide Fluor sind.

10. Farbstoffmischung nach mindestens einem der Ansprüche 1 bis 9,
dadurch gekennzeichnet, daß R³ Wasserstoff ist und Y² Vinyl oder β-Sulfatoethyl ist.

11. Farbstoffmischung nach mindestens einem der Ansprüche 1 bis 10,
dadurch gekennzeichnet, daß R⁶ Wasserstoff und R⁷ Wasserstoff oder Sulfo ist.

12. Verwendung einer Farbstoffmischung nach mindestens einem der Ansprüche 1 bis 11 zum Färben oder Bedrucken von hydroxy- und/oder carbonamidgruppenhaltigem Material, vorzugsweise Fasermaterial.

13. Verfahren zum Färben oder Bedrucken von hydroxy- und/oder carbonamidgruppenhaltigem Material, vorzugsweise Fasermaterial, bei welchem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, dadurch gekennzeichnet, daß man als Farbstoffe eine Farbstoffmischung von mindestens einem der Ansprüche 1 bis 11 einsetzt.

## Claims

1. A dyestuff mixture comprising one or more azo dyestuffs corresponding to the formula (1) and one or more azo dyestuffs corresponding to the formula (2) 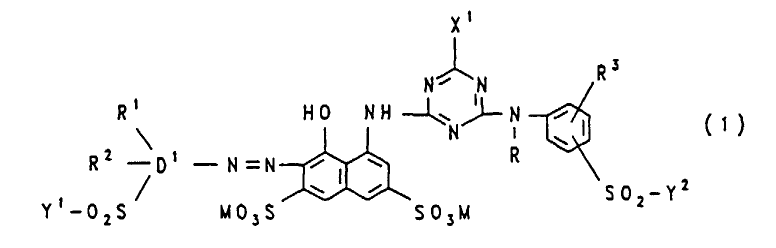 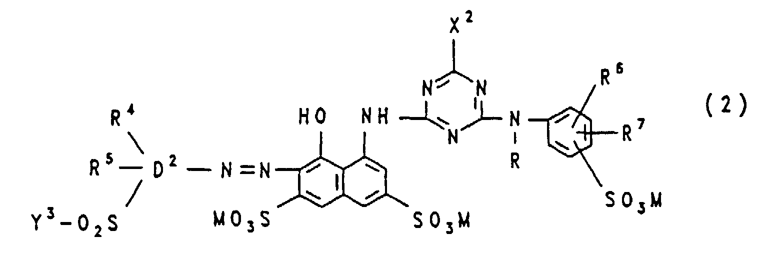 in which:
M is hydrogen or an alkali metal or the stoichiometric equivalent of an alkaline earth metal;
D¹ is the radical of a benzene or naphthalene nucleus;
D² has one of the meanings of D¹;
R¹ is hydrogen, alkyl having 1 to 4 carbon atoms or alkoxy having 1 to 4 carbon atoms, if D¹ or D² is the radical of a benzene nucleus, or is hydrogen or sulfo, if D¹ or D² is the radical of a naphthalene nucleus;
R² is hydrogen, alkyl having 1 to 4 carbon atoms, alkoxy having 1 to 4 carbon atoms or sulfo, if D¹ or D² is the radical of a benzene nucleus, or is hydrogen or sulfo, if D¹ or D² is the radical of a naphthalene nucleus;
R³ is hydrogen, alkyl having 1 to 4 carbon atoms, or alkoxy having 1 to 4 carbon atoms;
R⁴ is hydrogen, alkyl having 1 to 4 carbon atoms or alkoxy having 1 to 4 carbon atoms;
R⁵ is hydrogen, alkyl having 1 to 4 carbon atoms, alkoxy having 1 to 4 carbon atoms or sulfo;
R⁶ is hydrogen, alkyl having 1 to 4 carbon atoms or alkoxy having 1 to 4 carbon atoms;
R⁷ is hydrogen, alkyl having 1 to 4 carbon atoms, alkoxy having 1 to 4 carbon atoms or sulfo;
R is hydrogen or alkyl having 1 to 4 carbon atoms;
Y¹ is vinyl, (β-sulfatoethyl, β-thiosulfatoethyl or β-chloroethyl;
Y² has one of the meanings of Y¹;
Y³ has one of the meanings of Y¹;
X¹ is fluorine, bromine or chlorine;
X² has one of the meanings of X¹; and
the groups -SO₂-Y¹, -SO₂-Y² and -SO₂-Y³ are in the meta- or para-position relative to the azo group on the benzene nucleus of D¹ and D² or are bonded in the meta- or para-position relative to the amino group.

2. A dyestuff mixture as claimed in claim 1, comprising one or more azo dyestuffs corresponding to the formula (1) and one or more azo dyestuffs corresponding to the formula (2) in a mixing ratio of 90:10% by weight to 10:90% by weight.

3. A dyestuff mixture as claimed in claim 1, comprising one or more azo dyestuffs corresponding to the formula (1) and one or more azo dyestuffs corresponding to the formula (2) in a mixing ratio of 70:30% by weight to 30:70% by weight.

4. A dyestuff mixture as claimed in claim 1, comprising one or more azo dyestuffs corresponding to the formula (1) and one or more azo dyestuffs corresponding to the formula (2) in a mixing ratio of 55:45:% by weight to 45:55% by weight.

5. A dyestuff mixture as claimed in at least one of claims 1 to 4, in which, in the dyestuffs of the formulae (1) and (2), the radical R is hydrogen.

6. A dyestuff mixture as claimed in at least one of claims 1 to 5, in which D¹ and D² are both the radical of a benzene nucleus.

7. A dyestuff mixture as claimed in claim 6, in which R¹ is hydrogen, methoxy or methyl, R² is hydrogen or methoxy, R⁴ is hydrogen, methoxy or methyl, R⁵ is hydrogen or methoxy and Y¹ and Y³ independently of one another are vinyl or β-sulfatoethyl.

8. A dyestuff mixture as claimed in at least one of claims 1 to 7, in which X¹ and X² are both chlorine.

9. A dyestuff mixture as claimed in at least one of claims 1 to 7, in which X¹ and X² are both fluorine.

10. A dyestuff mixture as claimed in at least one of claims 1 to 9, in which R³ is hydrogen and Y² is vinyl or β-sulfatoethyl.

11. A dyestuff mixture as claimed in at least one of claims 1 to 10, in which R⁶ is hydrogen and R⁷ is hydrogen or sulfo.

12. The use of a dyestuff mixture as claimed in at least one of claims 1 to 11 for dyeing or printing material containing hydroxyl and/or carboxamide groups, preferably fiber material.

13. A process for dyeing or printing material containing hydroxyl and/or carboxamide groups, preferably fiber material, in which one or more dyestuffs are applied in dissolved form to the material and the dyestuff or dyestuffs are fixed on the material by means of heat or with the aid of an agent having an alkaline action or by means of both measures, which comprises employing a dyestuff mixture as claimed in at least one of claims 1 to 11 as dyestuffs.

## Revendications

1. Mélange de colorants, contenant un ou plusieurs colorants azoïques correspondant à la formule générale (1) et un ou plusieurs colorants azoïques correspondant à la formule générale (2) 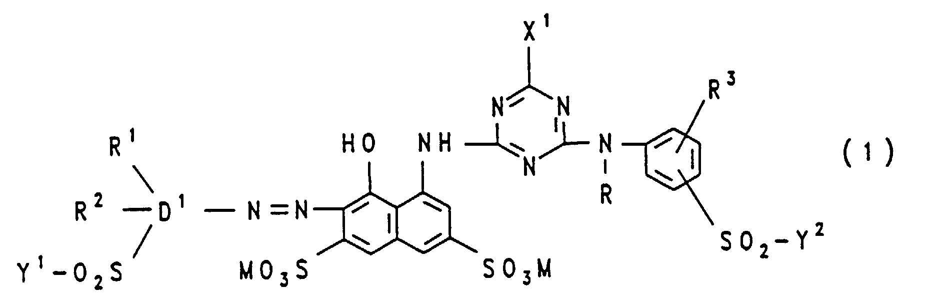 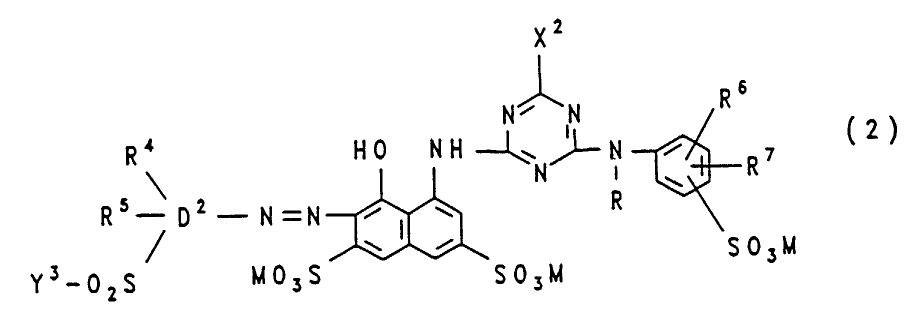 dans lesquelles:
M est un hydrogène ou un métal alcalin ou l'équivalent stoechiométrique d'un métal alcalino-terreux;
D¹ est le radical d'un noyau benzène ou naphtalène;
D² a l'une des significations de D¹;
R¹ est un hydrogène, un alkyle de 1 à 4 atomes de carbone ou un alcoxy de 1 à 4 atomes de carbone, dans le cas où D¹ ou D² signifie le radical d'un noyau benzène, ou est un hydrogène ou un sulfo, dans le cas où D¹ ou D² signifie le radical d'un noyau naphtalène;
R² est un hydrogène, un alkyle de 1 à 4 atomes de carbone, un alcoxy de 1 à 4 atomes de carbone ou un sulfo, dans le cas où D¹ ou D² signifie le radical d'un noyau benzène, ou est un hydrogène ou un sulfo, dans le cas où D¹ ou D² signifie le radical d'un noyau naphtalène;
R³ est un hydrogène, un alkyle de 1 à 4 atomes de carbone ou un alcoxy de 1 à 4 atomes de carbone;
R⁴ est un hydrogène, un alkyle de 1 à 4 atomes de carbone ou un alcoxy de 1 à 4 atomes de carbone;
R⁵ est un hydrogène, un alkyle de 1 à 4 atomes de carbone, un alcoxy de 1 à 4 atomes de carbone ou un sulfo;
R⁶ est un hydrogène, un alkyle de 1 à 4 atomes de carbone ou un alcoxy de 1 à 4 atomes de carbone;
R⁷ est un hydrogène, un alkyle de 1 à 4 atomes de carbone, un alcoxy de 1 à 4 atomes de carbone ou un sulfo;
R est un hydrogène ou un alkyle de 1 à 4 atomes de carbone;
Y¹ est un vinyle, un β-sulfatoéthyle, un β-thiosulfatoéthyle ou un β-chloroéthyle;
Y² a l'une des significations de Y¹;
Y³ a l'une des significations de Y¹;
X¹ est un fluor, un brome ou un chlore;
X² a l'une des significations de X¹;
les groupements -SO₂-Y¹, -SO₂-Y² et -SO₂-Y³ sont liés, en position méta ou para par rapport au groupement azoïque, au noyau benzène de D¹ et D² ou, selon le cas, en position méta ou para par rapport au groupement amino.

2. Mélange de colorants selon la revendication 1, contenant un ou plusieurs colorants azoïques correspondant à la formule générale (1) et un ou plusieurs colorants azoïques correspondant à la formule générale (2) dans un rapport de mélange de 90:10% en poids à 10:90% en poids.

3. Mélange de colorants selon la revendication 1, contenant un ou plusieurs colorants azoïques correspondant à la formule générale (1) et un ou plusieurs colorants azoïques correspondant à la formule générale (2) dans un rapport de mélange de 70:30% en poids à 30:70% en poids.

4. Mélange de colorants selon la revendication 1, contenant un ou plusieurs colorants azoïques correspondant à la formule générale (1) et un ou plusieurs colorants azoïques correspondant à la formule générale (2) dans un rapport de mélange de 55:45% en poids à 45:55% en poids.

5. Mélange de colorants selon au moins l'une des revendications 1 à 4, caractérisé en ce que, dans les colorants des formules (1) et (2), le radical R signifie un hydrogène.

6. Mélange de colorants selon au moins l'une des revendications 1 à 5, caractérisé en ce que D¹ et D² signifient, tous deux, le radical d'un noyau benzène.

7. Mélange de colorants selon la revendication 6, caractérisé en ce que R¹ est un hydrogène, un méthoxy ou un méthyle, R² est un hydrogène ou un méthoxy, R⁴ est un hydrogène, un méthoxy ou un méthyle, R⁵ est un hydrogène ou un méthoxy et Y¹ et Y³ signifient, indépendamment l'un de l'autre, un vinyle ou un β-sulfatoéthyle.

8. Mélange de colorants selon au moins l'une des revendications 1 à 7, caractérisé en ce que X¹ et X² sont, tous deux, un chlore.

9. Mélange de colorants selon au moins l'une des revendications 1 à 7, caractérisé en ce que X¹ et X² sont, tous deux, un fluor.

10. Mélange de colorants selon au moins l'une des revendications 1 à 9, caractérisé en ce que R³ est un hydrogène et Y² est un vinyle ou un β-sulfatoéthyle.

11. Mélange de colorants selon au moins l'une des revendications 1 à 10, caractérisé en ce que R⁶ est un hydrogène et R⁷ un hydrogène ou un sulfo.

12. Utilisation d'un mélange de colorants selon au moins l'une des revendications 1 à 11 pour teindre ou imprimer un matériau contenant des groupements hydroxy et/ou carbonamide, de préférence un matériau fibreux.

13. Procédé pour teindre ou imprimer un matériau contenant des groupements hydroxy et/ou carbonamide, de préférence un matériau fibreux, dans lequel on applique sur le matériau un ou plusieurs colorants sous forme dissoute et on fixe thermiquement le ou les colorant(s) sur le matériau ou à l'aide d'un agent à action alcaline ou au moyen des deux mesures, caractérisé en ce que l'on utilise, en tant que colorants, un mélange de colorants d'au moins l'une des revendications 1 à 11.
